# EUROPÄISCHE PATENTSCHRIFT

(11) **EP 4 648 921 B1**
(45) Veröffentlichungstag und Bekanntmachung des Hinweises auf die Patenterteilung: **11.02.2026**
(21) Anmeldenummer: 24708433.8
(22) Anmeldetag: 28.02.2024
(51) Int. Cl.: B23Q 7/04, H02K 41/03

(54) **LÄUFER FÜR EIN FLEXIBLES FERTIGUNGSSYSTEM UND FLEXIBLES FERTIGUNGSSYSTEM MIT EINEM SOLCHEN LÄUFER**
CARRIAGE FOR A FLEXIBLE MACHINING SYSTEM AND FLEXIBLE MACHINING SYSTEM COMPRISING SUCH A CARRIAGE
CHARIOT POUR UN SYSTEME FLEXIBLE D'USINAGE ET SYSTEME FLEXIBLE D'USINAGE COMPRENANT UN TEL CHARIOT

(30) Priorität: 07.03.2023 DE 102023105599
(43) Veröffentlichungstag der Anmeldung: 19.11.2025
(73) Patentinhaber: Beckhoff Automation GmbH, 33415 Verl (DE)
(72) Erfinder: GOLZ, Daniel, 33449 Langenberg (DE); GOLZ, Michael, 33617 Bielefeld (DE)
(74) Vertreter: Patentanwaltskanzlei WILHELM & BECK
(86) Internationale Anmeldenummer: PCT/EP2024/055119
(87) Internationale Veröffentlichungsnummer: WO 2024/184156

(56) Entgegenhaltungen:
- EP-A1- 3 904 248
- DE-A1- 102019 117 431

## Beschreibung

Die Erfindung betrifft einen Läufer für ein flexibles Fertigungssystem und ein flexibles Fertigungssystem mit einem solchen Läufer.

Flexible Fertigungssysteme sind Mehr-Maschinen-Systeme zur Bearbeitung von Werkstücken. Die einzelnen Bearbeitungsstationen sind dabei über eine Transporteinrichtung miteinander verkettet, um so einen automatisierten Werkstückfluss zu ermöglichen.

Als Transporteinrichtung werden in flexiblen Fertigungssystemen unter anderem Planarantriebssysteme eingesetzt, die einen elektromagnetischen Planarmotor mit einer planaren Statoreinheit und einen auf der Statoreinheit beweglichen Läufer umfassen. Aus der DE 10 2017 131 304 A1 ist ein Planarantriebssystem bekannt, bei dem eine Transportebene aus einem Verbund von Statormodulen besteht, wobei jedes Statormodul ein Statormodul-Gehäuse mit einer Statorfläche und einer unterhalb der Statorfläche angeordneten Spulenanordnung zum Erzeugen eines Statormagnetfeldes umfasst. Die Statormodule sind ausgelegt, die Spulenanordnung entsprechend den Steuersignalen einer an den Verbund von Statormodulen angeschlossenen Steuerung zu bestromen, um die Läufer, die jeweils ein plattenförmiges Läufergehäuse mit einer Permanentmagnet-Anordnung zum Erzeugen eines Läufermagnetfeldes aufweisen, auf der Transportebene zu bewegen. Die Läufer sind dabei mittels der Wechselwirkung von Statormagnetfeld und Läufermagnetfeld parallel zur Transportebene frei beweglich und können außerdem auch Bewegungen senkrecht zur Transportebene in einem begrenzten Abstandsbereich zur Transportebene ausführen, so dass die Läufer in Richtung aller sechs Starrkörper-Freiheitsgrade hochpräzise bewegbar sind.

Aus der DE 10 2019 117 431 A1 ist ein Planarantriebssystem mit einer Bearbeitungsstation bekannt. Wenn eine Bearbeitung eines auf einem Läufer transportierten Werkstücks direkt auf dem Läufer selbst durch ein Werkzeug der Bearbeitungsstation erfolgen soll, kann es durch die Einwirkung des Werkzeugs der Bearbeitungsstation bei der Bearbeitung des auf dem Läufer angeordneten Werkstücks jedoch vorkommen, dass die Planarmotor-Kräfte und -Momente nicht ausreichen, um den bei der Bearbeitung des Werkstücks hervorgerufenen Belastungen auf den Läufer entgegenzuwirken, so dass der Läufer dann ungewollt auf der Statorfläche aufschlägt und diese dabei beschädigen kann.

Auch bei einem auf die Statorfläche abgesenkten Läufer kann es zu Beschädigungen der Struktur des Stators kommen, wenn hohe Prozesskräfte auf das Werkstück und damit auf den Läufer wirken. Des Weiteren kann die Struktur des Läufers selbst beschädigt werden. Aus EP 3 904 248 A1 sind an den Bearbeitungsstationen angeordnete Stützstrukturen für die Läufer in einem Planarantriebssystem bekannt, die bei der Bearbeitung eines auf einem Läufer transportierten Werkstücks durch ein Werkzeug einer Bearbeitungsstation den Belastungen auf den Läufer mit einer Stützkraft entgegenwirken. Der Läufer kann dabei mittels der Statoreinheit des Planarmotors schwebend in die Stützlage und aus dieser heraus bewegt werden.

Es ist Aufgabe der Erfindung, einen Läufer für ein flexibles Fertigungssystem und ein flexibles Fertigungssystem mit einem Planarmotor als Transporteinrichtung und mit einem solchen Läufer bereitzustellen, die eine variable Werkstückbearbeitung ermöglichen.

Diese Aufgabe wird mit einem Läufer und einem flexiblen Fertigungssystem, wie sie in den beigefügten Ansprüchen definiert sind, gelöst.

Vorteilhafte Weiterbildungen sind in den abhängigen Ansprüchen angegeben.

Ein flexibles Fertigungssystem weist eine Fertigungsplattform, auf der eine Transporteinrichtung und eine Mehrzahl an Bearbeitungsstationen angeordnet sind, und eine Steuereinrichtung auf. Die Transporteinrichtung umfasst eine Mehrzahl von Statormodulen und wenigstens einen Läufer zum Transportieren von Werkstücken. Jedes Statormodul umfasst ein Statormodul-Gehäuse mit einer Statorfläche und einer unterhalb der Statorfläche angeordneten Spulenanordnung zum Erzeugen eines Statormagnetfeldes. Der Läufer umfasst ein plattenförmiges Läufergehäuse mit einer Permanentmagnet-Anordnung zum Erzeugen eines Läufermagnetfeldes und einer auf dem Läufergehäuse angeordneten Werkstückaufnahme. Die Werkstückaufnahme umfasst einen Rahmen mit zwei L-förmigen Wangen und einer Aufnahmeschale mit einer Innenform zum Einlegen eines Werkstücks. Jede L-förmige Wange umfasst einen ersten Arm zum Befestigen auf dem plattenförmigen Läufergehäuse und einen von dem ersten Arm vorkragenden zweiten Arm, der im Wesentlichen parallel zum plattenförmigen Läufergehäuse ausgerichtet ist, wobei die zweiten Arme der L-förmigen Wangen einander gegenüberliegend jeweils Längsausnehmungen zum seitlichen Abstützen der Aufnahmeschale umfassen. Die Mehrzahl von Statormodulen auf der Fertigungsplattform bildet einen Verbund mit einer aus den Statorflächen gebildeten Transportebene zum Verketten der Bearbeitungsstationen, die angrenzend an die Transportebene angeordnet sind, aus. Die Steuereinrichtung ist ausgelegt, Steuersignale an den Verbund aus der Mehrzahl von Statormodulen auszugeben und die Statormodule sind ausgelegt, die Spulengruppen der zugehörigen Statoreinheiten entsprechend den Steuersignalen zu bestromen, um den Läufer auf der Transportebene zu den Bearbeitungsstationen zu bewegen, wobei der Läufer oberhalb der Transportebene mittels der Wechselwirkung von Statorfeld und Läufermagnetfeld in eine erste Richtung und/oder eine zweite Richtung und/oder eine dritte Richtung bewegbar ist, wobei die erste Richtung und die zweite Richtung parallel zur Transportebene und die dritte Richtung senkrecht zur Transportebene orientiert sind. Jede Bearbeitungsstation umfasst ein Werkzeug zum Bearbeiten des Werkstücks in der Aufnahmeschale der Werkstückaufnahme des Läufers, wobei wenigstens eine Bearbeitungsstation einen über die Transportebene vorkragenden Rahmen zum Ablegen der Aufnahmeschale der Werkstückaufnahme des Läufers umfasst. Die Steuereinrichtung ist ausgelegt, im Rahmen der Bearbeitung des Werkstücks an der Bearbeitungsstation mit dem vorkragenden Rahmen den Läufer mit einem in der Aufnahmeschale befindlichen Werkstück mittels Steuersignalen auf dem Verbund aus der Mehrzahl von Statormodulen so zu bewegen, dass der vorkragende Rahmen der Bearbeitungsstation in Eingriff mit der von den zweiten Armen der L-förmigen Wangen des Rahmens der Werkstückaufnahme abgestützten Aufnahmeschale kommt, um die Aufnahmeschale aus den Längsausnehmungen der zweiten Arme der L-förmigen Wangen des Rahmens der Werkstückaufnahme vor der Bearbeitung des Werkstücks durch das Werkzeug der Bearbeitungsstation abzuheben.

Der Läufer mit der Werkstückaufnahme kann präzise in eine Ablageposition für die Aufnahmeschale mit dem Werkstück auf dem vorkragenden Rahmen der Bearbeitungsstation gesteuert werden, da der Läufer sich bei der Positionierung in seiner optimierten Flughöhe befindet.

Der vorkragende Rahmen der Bearbeitungsstation kann nach dem Ablegen in die Aufnahmeschale mit dem Werkstück, wenn die Aufnahmeschale der Werkstückaufnahme des Läufers von der Werkstückaufnahme abgehoben und auf dem vorkragenden Rahmen der Bearbeitungsstation positioniert ist, die Prozesskräfte und -momente auf das Werkstück beim Bearbeiten durch das Werkzeug der Bearbeitungsstation aufnehmen, um zu verhindern, dass die Prozesskräfte und -momente auf den Läufer oder auf die Statorfläche wirken.

Prozesskräfte können insbesondere von einem Werkzeug erzeugte Kräfte, beispielsweise Klemmkräfte, zur Verformung von Werkstücken aufgebrachte Kräfte, Kräfte, die bei einer spanabhebenden Bearbeitung auf ein Werkstück wirken, Anpresskräfte etc. sein. Vom Werkzeug eingebrachte Prozessmomente können das Anbringen von schraubbaren Elementen wie etwa Schrauben, Muttern oder Schraubdeckeln, beispielsweise beim Verschließen von Behältern, wie etwa Flaschen, oder eine Bearbeitung mit rotierendem Werkzeug, beispielsweise beim Bohren, Fräsen, Schleifen oder Schneiden sein.

Die Steuereinrichtung des flexiblen Fertigungssystems kann weiter ausgelegt sein, den Läufer mit der Werkstückaufnahme und dem in der Aufnahmeschale befindlichen Werkstück mittels Steuersignalen auf dem Verbund aus der Mehrzahl von Statormodulen so zu bewegen, dass der Läufer an der den über die Transportebene vorkragenden Rahmen aufweisenden Bearbeitungsstation seitlich vorbeigeführt wird, wobei der vorkragende Rahmen in den Freiraum zwischen dem Läufergehäuse und der von der Werkstückaufnahme seitlich abgestützten Aufnahmeschale hineinragt.

Durch die Auslegung der Werkstückaufnahme mit dem Rahmen mit den zwei L-förmigen Wangen und der Aufnahmeschale, die auf den zweiten Armen der L-förmigen Wangen, die im Wesentlichen parallel zum plattenförmigen Läufergehäuse ausgerichtet sind, angeordnet ist, kann der Läufer trotz eines erhöhten Aufbaus Hindernisse passieren, die in den Freiraum zwischen dem plattenförmige Läufergehäuse und die von der Werkstückaufnahme seitlich abgestützten Aufnahmeschale hineinragen. Insbesondere ist es möglich, dass der Läufer an der den über die Transportebene vorkragenden Rahmen aufweisenden Bearbeitungsstation seitlich ohne Ausweichen vorbeigeführt wird.

Es besteht die Möglichkeit, abhängig von Prozesskräften und -momenten auf das Werkstück beim Bearbeiten durch das Werkzeug der Bearbeitungsstation unterschiedliche Vorgehensweisen zu wählen. Insbesondere bei geringen Prozesskräften und -momenten auf das Werkstück beim Bearbeiten durch das Werkzeug der Bearbeitungsstation kann die Steuereinrichtung ausgelegt sein, den Läufer im schwebenden Zustand zu halten, so dass während der Werkstückbearbeitung die Freiheitsgrade des Planarmotors zur veränderten Positionierung des Werkstücks weiter genutzt werden können. In der Reihenklemmen-Fertigung kann diese Vorgehensweise zum Beispiel zum Löten von Kontakten auf einer Platine eingesetzt werden.

Unter "schwebend" wird dabei verstanden, dass zwischen der Permanentmagnet-Anordnung des Läufers und der Statorfläche des Statormoduls ein Luftspalt verbleibt.

Insbesondere bei mittleren Prozesskräften und -momenten auf das Werkstück beim Bearbeiten durch das Werkzeug der Bearbeitungsstation kann die Steuereinrichtung ausgelegt sein, den Läufer auf der Statorfläche vor dem Bearbeiten abzusetzen. In der Reihenklemmen-Fertigung wird diese Vorgehensweise beispielsweise eingesetzt, um die seitlichen Kommunikationskontakte, die als Federkontakte ausgebildet sind, zu kontaktieren und so die Reihenklemmen-Software aufzuspielen.

Insbesondere bei hohen Prozesskräften und -momenten auf das Werkstück beim Bearbeiten durch das Werkzeug der Bearbeitungsstation kann die Steuereinrichtung ausgelegt sein, den Rahmen und/oder die Aufnahmeschale der Werkstückaufnahme vor dem Bearbeiten auf dem vorkragenden Rahmen der Bearbeitungsstation durch ein Absenken des Läufers über dem vorkragenden Rahmen abzulegen. Der vorkragende Rahmen der Bearbeitungsstation kann dann die Prozesskräfte und -momente bei der Werkstückbearbeitung vollständig aufnehmen. In der Reihenklemmen-Fertigung kann diese Vorgehensweise zum Beispiel genutzt werden, um in einer Presse das Gehäuse der Reihenklemme zu verpressen.

Der vorkragende Rahmen der Bearbeitungsstation kann ausgebildet sein, die abgelegte Aufnahmeschale zu verfahren. Durch die zweiteilige Ausführung der Werkstückaufnahme aus dem Rahmen mit den zwei L-förmigen Wangen und der Aufnahmeschale mit einer Innenform zum Einlegen eines Werkstücks kann die Aufnahmeschale mit dem Werkstück aus der Werkstückaufnahme des Läufers freigesetzt werden, um die Aufnahmeschale mit dem Werkstück in eine Bearbeitungsvorrichtung einzuschleusen. In der Reihenklemmen-Fertigung kann diese Vorgehensweise beispielsweise genutzt werden, um in einer Bearbeitungsstation die elektrischen Kontakte der Reihenklemme gleichzeitig zu kontaktieren und zu prüfen.

Der über die Transportebene vorkragende Rahmen der Bearbeitungsstation kann eine Führungsstruktur, beispielsweise eine Rollenführung aufweisen, die in Eingriff mit der Werkstückaufnahme des Läufers kommt und den Läufer in die korrekte Position zwingt. An der Übergabeposition angekommen, wird der Läufer abgesenkt beziehungsweise die Aufnahmeschale von der Bearbeitungsstation angehoben und übergibt die Aufnahmeschale des Werkstückträgers an den vorkragenden Rahmen der Bearbeitungsstation. Die Aufnahmeschale kann dabei durch die Außenform und/oder durch einen zentralen rechteckigen Ausschnitt, in den ein Gegenstück der Bearbeitungsstation eingreift, zentriert werden.

Auf der Fertigungsplattform kann weiter ein Werkstückspeicher vorgesehen sein, der eine Handhabungseinrichtung zum Überführen des Werkstücks aus dem Werksstückspeicher in die Aufnahmeschale beziehungsweise zum Überführen des Werkstücks aus der Aufnahmeschale in den Werksstückspeicher umfasst. Durch diese zusätzliche Integration kann ein flexibler und schneller Werkstückfluss erreicht werden.

Der Rahmen der Werkstückaufnahme des Läufers kann einen ersten und einen zweiten C-Profilträger umfassen, die spiegelbildlich ausgeführt sind. Der erste und der zweite C-Profilträger weisen jeweils einen Längsträger auf, wobei auf der Innenseite des Längsträgers eine winklige Längsausnehmung im oberen Kantenbereich ausgebildet ist. Die Aufnahmeschale der Werkstückaufnahme weist an zwei gegenüberliegenden Seiten C-förmige Eingriffe auf, wobei der obere Eingriffsarm des C-förmigen Eingriffs ausgelegt ist, in die winklige Längsausnehmung auf der Innenseite des Längsträgers einzugreifen.

Durch diese Auslegung kann die Aufnahmeschale auf einfache Weise aus dem Rahmen zwischen dem ersten und zweiten C-Profilträger durch Anheben und Herausziehen aus dem Rahmen der Werkstückaufnahme entnommen werden.

Auf der Innenseite des Längsträgers unterhalb der Längsausnehmung und auf der Außenseite der C-förmigen Eingriffe der Aufnahmeschale ist jeweils eine Abschrägung vorgesehen. Durch die Abschrägung der Anliegeflächen wird ein einfaches Entnehmen der Aufnahmeschale ermöglicht. Des Weiteren wird durch die Abschrägung der Anliegeflächen eine exakte und reproduzierbare Positionierung der Aufnahmeschale in der Werkstückaufnahme und relativ zum Läufer ermöglicht.

Die Erfindung wird anhand der beigefügten Figuren näher erläutert.
Figur 1 zeigt eine flexible Fertigungsanlage, wobei Figur 1A eine perspektivische Ansicht und Figur 1B eine Aufsicht darstellt.
Figur 2 zeigt einen Ausschnitt der Transporteinrichtung im flexiblen Fertigungssystem aus Figur 1.
Figur 3 zeigt den Läufer der Transporteinrichtung aus Figur 2, wobei Figur 3A eine Gesamtdarstellung und Figur 3B bis Figur 3D die Bauteile getrennt voneinander wiedergeben.
Figur 4 zeigt einen Ausschnitt der Werkstückaufnahme des Läufers aus Figur 3, wobei Figur 4A und Figur 4B eine erste Ausführungsform und Figur 4C eine zweite Ausführungsform darstellt.
Figur 5 zeigt schematisch im Querschnitt eine Typ-1-Bearbeitungsstation.
Figur 6 zeigt schematisch im Querschnitt eine Typ-2-Bearbeitungsstation.
Figur 7A zeigt schematisch im Querschnitt eine Typ-3-Bearbeitungsstation, wobei Figur 7A eine erste Ausführungsform und Figur 7B eine zweite Ausführungsform darstellt.
Figur 8 zeigt einen Ausschnitt der Transporteinrichtung im flexiblen Fertigungssystem mit einem geraden Transportweg.
Figur 9 zeigt einen Bearbeitungsvorgang mit einer Typ-3-Bearbeitungsstation für die Reihenklemmen-Fertigung, bei der die Reihenklemme in die Bearbeitungsstation eingeschleust wird, wobei Figur 9A bis Figur 9D nacheinander aufgenommene Momentbilder des Ablaufs wiedergeben.

In den Zeichnungen werden für gleiche Elemente dieselben Bezugszeichen verwendet. Weiterhin kann es aus Gründen der Übersichtlichkeit vorgesehen sein, dass nicht in jeder Figur sämtliche Elemente gezeigt sind. Ferner kann aus diesem Grund auch vorgesehen sein, dass nicht in jeder Zeichnung jedes Element mit einem eigenen Bezugszeichen versehen ist.

Begriffe, die eine räumliche Anordnung beschreiben, wie etwa "oben", "unten", "neben", "seitlich", "horizontal", "vertikal", "rechts", "links" beziehen sich jeweils auf die in der beschriebenen Figur dargestellte Anordnung. Derartige Begriffe dienen lediglich zur Erleichterung der Verständlichkeit der Beschreibung und sind nicht einschränkend auszulegen.

Die Erfindung wird am Beispiel eines flexiblen Fertigungssystems, das im Rahmen einer Herstellung von elektronischen Reihenklemmen eingesetzt wird, erläutert. Elektronische Reihenklemmen sind flach gehaltene Reihenklemmen, die auf einer Tragschiene aneinandergereiht werden können. Elektronische Reihenklemmen verdrahten analoge und digitale Ein- und Ausgänge. Die Hauptaufgabe der elektronischen Reihenklemmen ist es, eine Vielzahl von unterschiedlichen Sensorsignalen, beispielsweise einer Maschine oder auch in einem Gebäude zu bündeln und über ein einheitliches Bussignal zur Steuerung weiterzuleiten, beziehungsweise Befehle von der Steuerung an die Aktoren weiterzugeben.

Flexible Fertigungssysteme sind Mehr-Maschinensysteme zur Bearbeitung von Werkstücken, insbesondere in der Serienfertigung. Die einzelnen Bearbeitungsstationen, in der Regel nummerisch gesteuerte Maschinen, sind über eine Transporteinrichtung miteinander verkettet, um einen automatischen Werkstückfluss zu ermöglichen. Zusätzlich zu den Bearbeitungsstationen ist ein Werkstückspeicher mit einer entsprechenden Übergabestation vorgesehen. Mit flexiblen Fertigungssystemen lassen sich Produktionsprozesse bei gleichzeitig hohen Durchlaufzeiten leicht an neue Anforderungen anpassen.

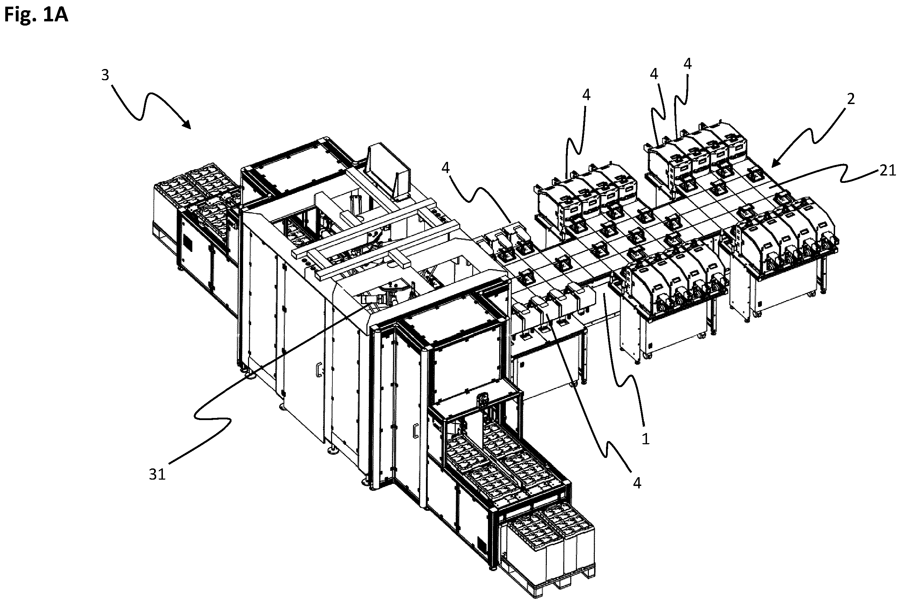

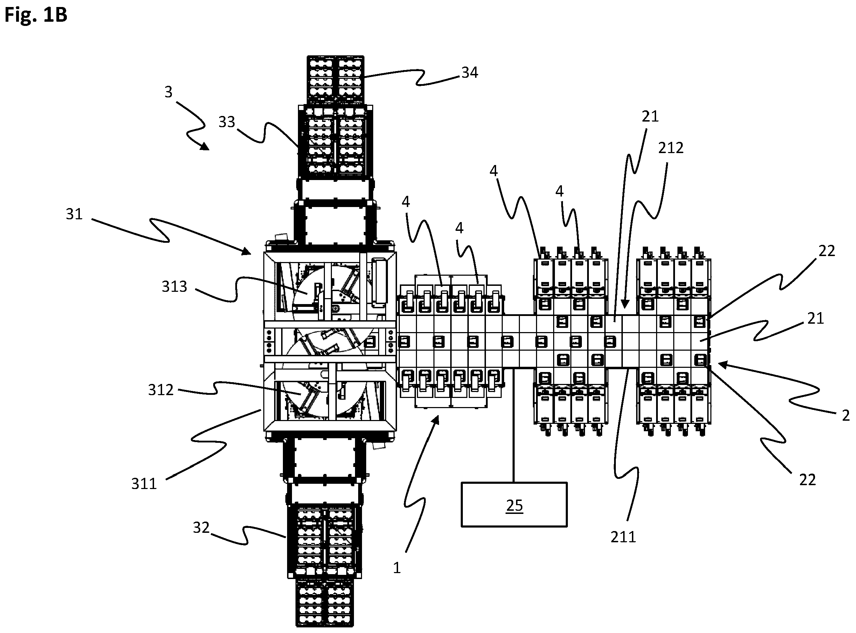

Figur 1 zeigt ein flexibles Fertigungssystem zum Einsatz im Rahmen einer Reihenklemmenproduktion. Das flexible Fertigungssystem ist in Figur 1A in perspektivischer Darstellung und in Figur 1B als Aufsicht dargestellt. Die Basis des flexiblen Fertigungssystems ist eine rechteckige Fertigungsplattform 1, auf der eine Transporteinrichtung 2, ein Werkstückspeicher 3 und mehrere Bearbeitungsstationen 4 angeordnet sind.

Die Transporteinrichtung 2 ist als Planarantriebssystem ausgelegt und weist einen Verbund aus Statormodulen 21 mit quadratischen Statormodul-Gehäusen 211 auf. Die Statorflächen 212 der quadratischen Statormodul-Gehäuse 211 bilden eine geschlossene Transportebene. Bei der in Figur 1 gezeigten Ausführungsform wird der Verbund aus quadratischen Statormodulen 21 aus drei Reihen von Statormodulen 21 gebildet, wobei seitlich im Bereich der Bearbeitungsstationen 4 zusätzlich Statormodule vorgesehen sind. Anstatt einer quadratischen Statormodul-Form sind auch andere Geometrien, insbesondere solche, die sich zu einer geschlossenen Transportebene zusammensetzen lassen, möglich. Ferner können durch entsprechende Anordnung der Statormodule beliebig geformte Transportebenen, beispielsweise quadratische, rechteckige, L-förmige oder ringförmige Transportebenen realisiert werden.

Der Werkstückspeicher 3 befindet sich bei der in Figur 1 gezeigten Ausführungsform an der Stirnseite der Transportebene und weist eine Handhabungseinrichtung 31 auf, die ein die drei Reihen von Statormodulen 21 der Transportebene übergreifendes Tragegestell 311 mit einem ersten und zweiten Bestückungsautomaten 312, 313 in Form von Delta-Robotern umfasst. An die Transportebene angrenzend weist der Werkstückspeicher 3 weiter eine erste und zweite Transportauflage 32, 33 für Werkstückgebinde 34 auf. Die Werkstückgebinde 34 sind bei der in Figur 1 gezeigten Ausführungsform stapelbare Paletten mit Einsätzen für Reihenklemmen. Die untere erste Transportauflage 32 dient zum Heranführen von Paletten mit vorgefertigten Reihenklemmen zur Weiterbearbeitung im Fertigungssystem. Die obere zweite Transportauflage 33 wird zum Abtransport von Paletten mit im Fertigungssystem weiterverarbeiteten Reihenklemmen eingesetzt.

Die Transporteinrichtung 2 weist ferner eine Mehrzahl von Läufern 22 auf, die auf der aus dem Verbund der Statorflächen gebildeten Transportebene bewegbar sind. Die Läufer 22 dienen zum Transportieren von Werkstücken, bei der in Figur 1 gezeigten Ausführungsform von Reihenklemmen, zwischen dem Werkstückspeicher 3 und den Bearbeitungsstationen 4. Die Läufer 22 weisen ein quadratisch plattenförmiges Läufergehäuse 221 auf, auf dem eine Werkstückaufnahme 23 angeordnet ist. Anstatt einer quadratischen Läufergehäuse-Form sind auch andere Geometrien möglich.

Im Statormodul-Gehäuse 211 der Statormodule 21 ist unter der Statorfläche 212 eine Spulenanordnung zum Erzeugen eines Statormagnetfeldes vorgesehen. Die Läufer 22 wiederum besitzen in dem plattenförmigen Läufergehäuse 221 eine Permanentmagnet-Anordnung zum Erzeugen eines Läufermagnetfeldes. Die Statormodule 21 sind mit einer Steuereinrichtung 25 der Transporteinrichtung 2 verbunden. Die Steuereinrichtung 25 gibt Steuersignale an die Statormodule 21 aus, wobei die Statormodule 21 ausgelegt sind, die Spulenanordnung des Statormoduls entsprechend den Steuersignalen zu bestromen, um die Läufer 22 auf der Transportebene mittels der Wechselwirkung von Statormagnetfeld und Läufermagnetfeld zu bewegen. Die Läufer 22 können dabei parallel zur Transportebene verfahren werden und außerdem auch senkrecht zur Transportebene in einem begrenzten Abstandsbereich eine Bewegung ausführen, so dass die Läufer 22 in Richtung aller sechs Starrkörperfreiheitsgrade bewegbar sind.

In der in Figur 1 gezeigten Ausführungsform belädt der untere erste Bestückungsautomat 312 der Handhabungseinrichtung 31 die Läufer 22, indem er aus den Werkstückgebinden 34 die vorgefertigten Reihenklemmen entnimmt und in den Werkstückaufnahmen 222 der von dem ersten Bestückungsautomaten 312 positionierten Läufern 22 aufspannt. Der obere zweite Bestückungsautomat 313 legt die von den Bearbeitungsstationen 4 weiterverarbeiteten Reihenklemmen, die der zweite Bestückungsautomat 313 aus den Werkstückaufnahmen 222 der unter dem zweiten Bestückungsautomaten 313 positionierten Läufern 22 entnimmt, dann wieder in den Werkstückgebinden 34 ab.

Bei der in Figur 1 gezeigten Ausführungsform werden die Läufer 22 durch die Steuereinrichtung 25 so gesteuert, dass die beiden äußeren Statormodul-Reihen als Transportstraßen im Wesentlichen zum Verfahren der vom ersten Bestückungsautomat 312 mit vorgefertigten Reihenklemmen beladenen Läufer 22 zu den entlang der Transportebene angeordneten Bearbeitungsstationen 4 dienen. Die mittlere Statormodul-Reihe wird dagegen im Wesentlichen als Verfahrweg genutzt, um die Läufer 22 mit den von den Bearbeitungsstationen 4 bearbeiteten Reihenklemmen zurück zum zweiten Bestückungsautomat 313 zu bringen.

Bei der in Figur 1 gezeigten Ausführungsform sind drei Typen von Bearbeitungsstationen 4 entlang der Transportebene vorgesehen. Eine erste Gruppe Typ-1-Bearbeitungsstationen 41 ist an die Transportebene benachbart zur Handhabungseinrichtung 31 beiderseits der Transportebene im Bereich der kürzeren zusätzlichen Statormodul-Reihen angeordnet. Daran anschließend sind entlang der beiden Seiten der Transportebene dann eine zweite Gruppe von Typ-2-Bearbeitungsstationen 42 und dann eine dritte Gruppe von Typ-3-Bearbeitungsstationen 43 positioniert.

Die unterschiedlichen Typen von Bearbeitungsstationen 4 stehen für die Möglichkeit, abhängig von Prozesskräften und -momenten auf das Werkstück beim Bearbeiten durch das Werkzeug der Bearbeitungsstation unterschiedliche Vorgehensweisen zu wählen.

Bei geringen Prozesskräften und -momenten auf das Werkstück beim Bearbeiten wird eine Typ-1-Bearbeitungsstation 41 eingesetzt, bei der der Läufer im schwebenden Zustand gehalten wird, wenn das Werkstück bearbeitet wird, so dass während der Werkstückbearbeitung die Freiheitsgrade des Planarmotors zur veränderten Positionierung des Werkstücks weiter genutzt werden können. In der Reihenklemmen-Fertigung kann diese Vorgehensweise zum Beispiel zum Löten von Kontakten auf einer Platine eingesetzt werden.

Bei mittleren Prozesskräften und -momenten auf das Werkstück beim Bearbeiten wird eine Typ-2-Bearbeitungsstation 42 eingesetzt. In einer solchen Bearbeitungsstation kann der Läufer auf der Statorfläche abgesetzt und anschließend bearbeitet werden. In der Reihenklemmen-Fertigung wird diese Vorgehensweise beispielsweise eingesetzt, um die seitlichen Kommunikationskontakte, die als Federkontakte ausgebildet sind, zu kontaktieren und so die Reihenklemmen-Software aufzuspielen.

Bei hohen Prozesskräften und -momenten auf das Werkstück beim Bearbeiten wird eine Typ-3-Bearbeitungsstation 43 eingesetzt. In einer solchen Bearbeitungsstation kann die Aufnahmeschale mit dem Werkstück in einer optimalen Schwebehöhe des Läufers auf einem vorkragenden Rahmen der Bearbeitungsstation abgelegt werden. Der vorkragende Rahmen der Bearbeitungsstation kann dann die Prozesskräfte und -momente bei der Werkstückbearbeitung vollständig aufnehmen. In der Reihenklemmen-Fertigung kann diese Vorgehensweise zum Beispiel genutzt werden, um in einer Presse das Gehäuse der Reihenklemme zu verpressen.

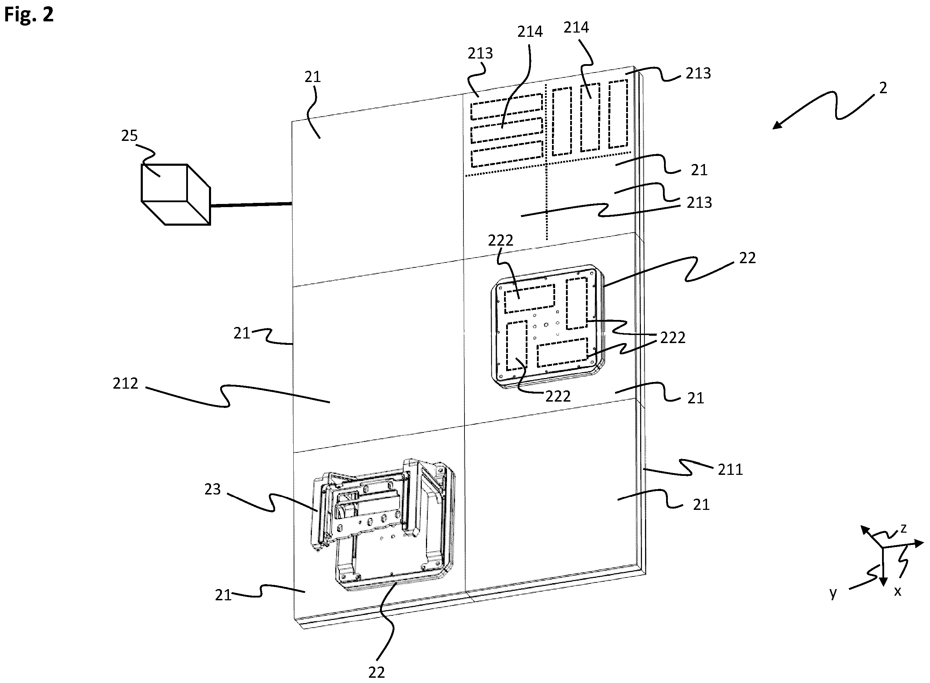

In Figur 2 ist ein Ausschnitt der als Planarantriebssystem ausgelegten Transporteinrichtung 2 des flexiblen Fertigungssystems gezeigt.

Der Ausschnitt in Figur 2 zeigt sechs quadratische Statormodule 21, wobei die sechs quadratischen Statormodule ein Rechteck bestehend aus Reihen mit jeweils drei Statormodulen bilden. Auf der Statorfläche 212 des quadratischen Statormodul-Gehäuses 211 kann eine zusätzliche, in Figur 2 nicht dargestellte, Abdeckung, vorzugsweise aus einem nicht magnetischen Material, vorgesehen sein. Die Abdeckung kann beispielsweise dazu dienen, die Statorfläche 212 bei Bearbeitungsprozessen vor Beschädigungen zu schützen.

Die Statormodule 21 sind in der Regel starr und raumfest angeordnet, so dass die Statorflächen 212 der Statormodule 21 eine zusammenhängende Transportebene bilden. In Figur 2 ist ein raumfestes Koordinatensystem mit X-Achse, Y-Achse und Z-Achse angezeigt. Das Koordinatensystem ist dabei so festgelegt, dass die Transportebene in der durch die X-Achse und Y-Achse aufgespannten Ebene liegt.

Gegebenenfalls kann jedem Statormodul 21 auch ein eigenes Koordinatensystem zugeordnet sein. Dies ist beispielsweise dann sinnvoll, wenn einzelne Statormodule in Bezug auf andere Statormodule bewegbar sind. Einzelne Statormodule können beispielsweise in Form eines Aufzugs ausgelegt sein, so dass sie in unterschiedliche Positionen und/oder zwischen unterschiedlichen Transportebenen bewegt werden können. Ferner können die Statormodule auch kipp- oder schwenkbar ausgelegt sein. Des Weiteren können die Statormodule auch in der Transportebene verschiebbar bzw. translatierbar ausgelegt sein.

Im oben rechts dargestellten Statormodul 21 ist der Statormodul-Aufbau skizziert. Das Statormodul 21 setzt sich aus vier Statoreinheiten 213 zusammen, wobei die vier Statoreinheiten 213 in einer quadratischen Zwei-auf-Zwei-Anordnung innerhalb des Statormoduls 21 ausgeführt sind. Jede Statoreinheit 213 umfasst eine Spulengruppe 214, die unterhalb der Statorfläche 212 angeordnet ist. Die Spulengruppe 214 besteht dabei aus drei rechteckigen Spulen, die parallel zueinander angeordnet sind und sich in ihrer Längserstreckung parallel zu einer Außenkante der Statoreinheit 213 orientieren. Unter der in Figur 21 dargestellten Spulengruppe 214 der Statoreinheit 213 sind weitere Spulengruppen (nicht gezeigt) angeordnet, wobei die aufeinander gestapelten Schichten aus Spulengruppen in Bezug auf ihre Längserstreckung jeweils eine um 90° gedrehte Orientierung aufweisen. In der schematischen Darstellung von Figur 2 sind die unterschiedlichen Schichten aus Spulengruppen 214, die jeweils eine um 90° gedrehte Orientierung aufweisen, zur Veranschaulichung in zwei benachbarten Statoreinheiten 213 gezeigt. Die benachbarten Statoreinheiten 213 sind in ihrem Aufbau und der Orientierung der unterschiedlichen Schichten aus Spulengruppen 214 identisch aufgebaut. Die Spulengruppen 214 der Statoreinheiten 213 des Statormoduls 21 bilden die Spulenanordnung zum Erzeugen des Statormagnetfeldes.

Der Ausschnitt in Figur 2 zeigt weiter zwei Läufer 22 auf den sechs dargestellten Statormodulen 21. Wie in Figur 2 an einem Läufer gezeigt ist, setzt sich die Permanentmagnet-Anordnung im plattenförmigen quadratischen Läufergehäuse 221 aus vier rechteckigen Permanentmagnet-Einheiten 222 zusammen, die im Läufergehäuse umlaufend parallel zu den Außenkanten angeordnet sind und eine Ringstruktur bilden.

Das durch Bestromung der Spulenanordnung in den Statormodulen 21 erzeugte Statormagnetfeld kann mit dem Läufermagnetfeld der Permanentmagnet-Anordnung der einzelnen Läufer 22 wechselwirken, um den Läufer 22 von der Transportebene abzuheben und über die Transportebene zu bewegen. Die Bewegung des Läufers 22 kann dabei insbesondere in einer durch die X-Achse und die Y-Achse aufgespannten Ebene in beliebiger Richtung über die Transportebene erfolgen.

Durch die geregelte Veränderung des Statormagnetfeldes kann der Läufer nicht nur parallel zur Transportebene, d. h. in Richtung der X- und Y-Achsen bewegt werden, sondern es ist auch eine beschränkte Bewegung entlang der Z-Achse möglich, d. h. ein Anheben und Absenken des Läufers, wobei sich der Luftspalt zwischen der Transportebene und dem Läufer verändert. Weiterhin kann auch ein Rotieren des Läufers um die Z-Achse d. h. ein Gieren, eine Rotation um die X-Achse, d. h. ein Rollen, und/oder um die Y-Achse, d. h. ein Nicken in eingeschränktem Maß, ausgeführt werden. Die Läufer sind somit in Richtung aller sechs Starrkörper-Freiheitsgrade bewegbar.

In Figur 2 ist schematisch auch die Steuereinrichtung 25 dargestellt, die mit den Statormodulen 21 verbunden ist, um Steuersignale an die Statormodule auszugeben. Dabei kann, wie in Figur 2 gezeigt, die Steuereinrichtung 25 mit einem einzelnen Statormodul verbunden sein, das dann ausgelegt ist, die Steuersignale an die weiteren Statormodule im Verbund zu übermitteln. Alternativ kann auch jedes Statormodul mit der Steuereinrichtung 25 separat verbunden sein.

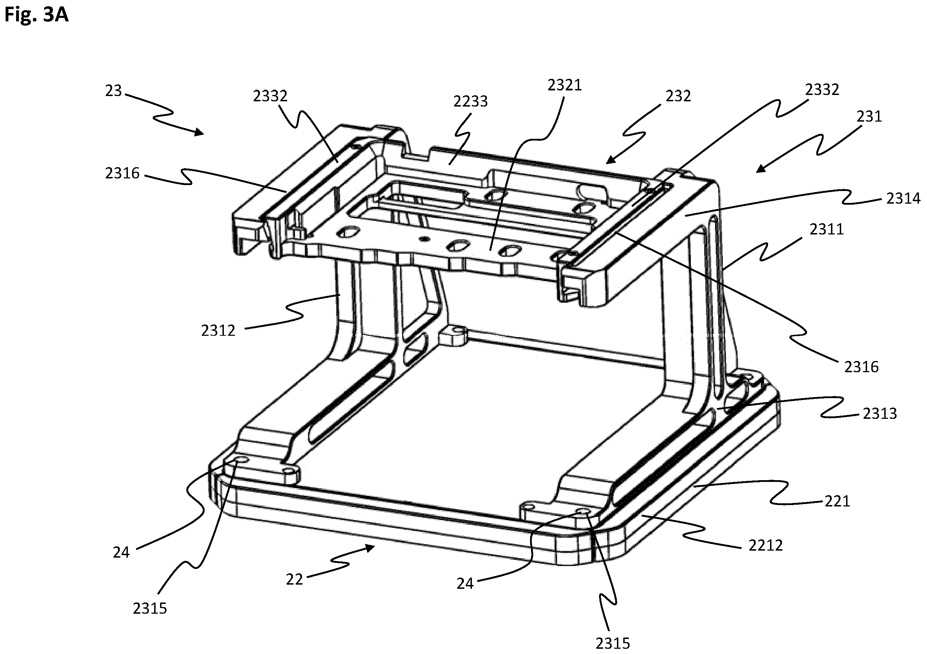

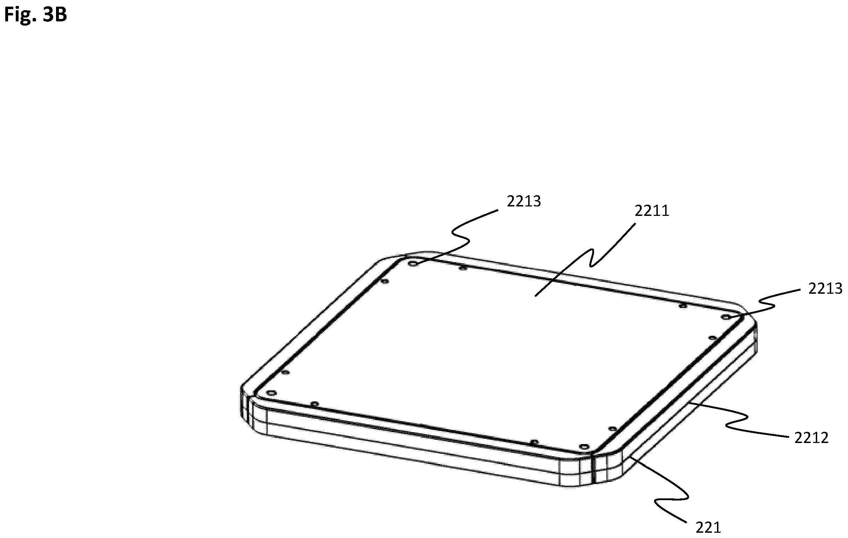

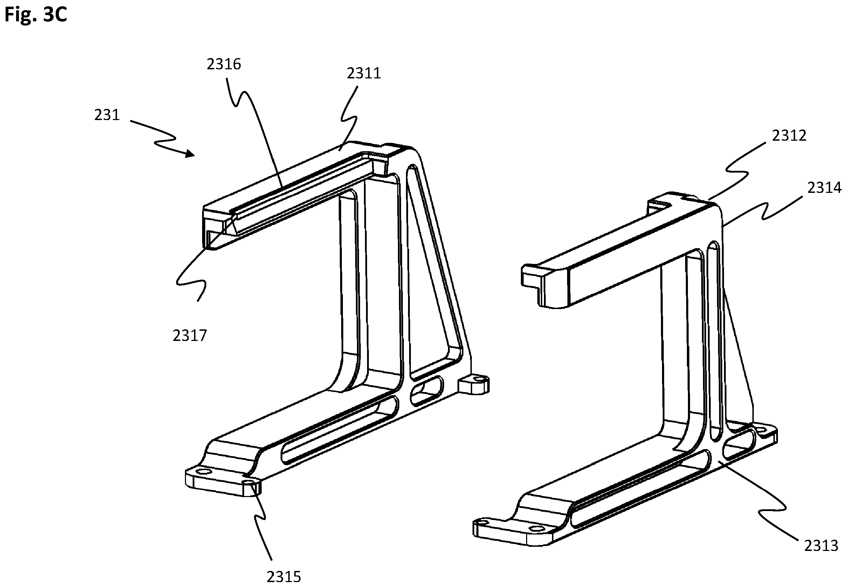

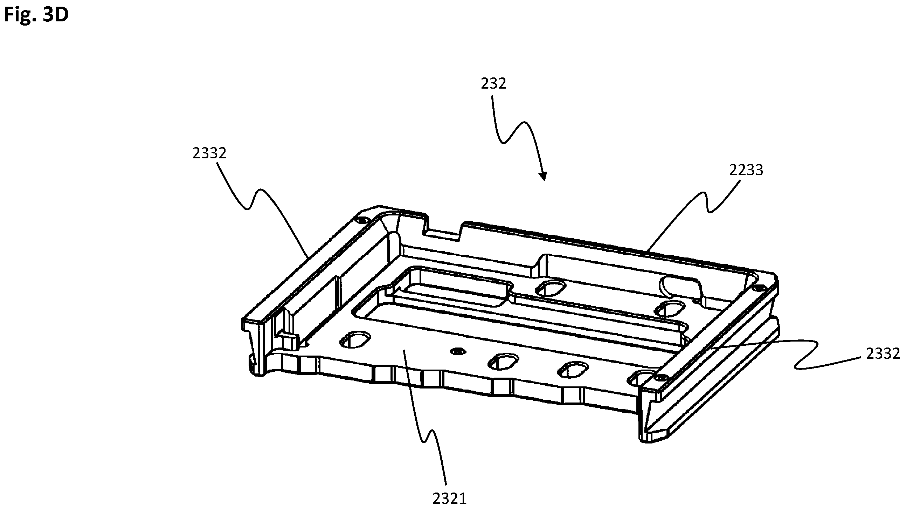

Figur 3 zeigt den Aufbau des Läufers 22 mit der Werkstückaufnahme 23, wobei Figur 3A eine perspektivische Gesamtdarstellung zeigt und Figuren 3B bis 3D die verschiedenen Bauteile getrennt voneinander darstellen.

Das plattenförmige Läufergehäuse 221 weist, wie Figur 3B zeigt, einen quadratischen Zentralkörper 2211 auf, der umlaufend an den vier Außenseiten Stoßfänger 2212 aufweist. Auf dem plattenförmigen Zentralkörper 2211 sind auf der Oberseite entlang der Außenkanten Bohrungen 2213 zur Aufnahme von Haltemitteln vorgesehen. Die Haltemittel können beispielsweise Schrauben sein, die dann in in den Bohrungen 2213 vorgesehene Innengewinde eingreifen. Figur 3B zeigt eine Ausführungsform mit jeweils drei in vier Eckbereichen angeordneten Bohrungen 2213. Es können weitere Bohrungen auf der Oberfläche des Zentralkörpers 2211 vorgesehen sein.

Die Werkstückaufnahme 23 auf dem Läufers 22 setzt sich aus einem zweiteiligen Rahmen 231, der in Figur 3C gezeigt ist, und einer Aufnahmeschale 232, die in Figur 3D gezeigt ist, zusammen. Der zweiteilige Rahmen 231 kann beispielsweise aus Aluminium oder Kunststoff mittels Spritz- oder Druckguss gefertigt werden und umfasst einen ersten und einen zweiten C-Profilträger 2311, 2312, die spiegelbildlich ausgeführt sind.

Wie Figur 3C weiter zeigt, lassen sich der erste und der zweite C-Profilträger 2311, 2312 in eine L-förmige Auflage 2313 und eine L-förmige Wange 2413 unterteilen. Die L-förmige Auflage 2313 weist einen länglichen Grundkörper auf, der an beiden Enden Anschlusslaschen mit Durchbohrungen 2315 umfasst. Im Grundkörper sind seitliche Aussparungen zur Gewichtsreduktion ausgeführt. Die L-förmige Auflage umfasst außerdem eine dreieckige Stütze, die vom Grundkörper in einem hinteren Abschnitt vorsteht. Der erste und der zweite C-Profilträger 2311, 2312 sind in der gezeigten Ausführungsform jeweils aus einem Stück gefertigt. Alternativ können die C-Profilträger auch aus mehreren Teilen zusammengesetzt werden.

Auf dem hinteren Abschnitt des Grundkörpers der L-förmigen Auflage 2313 ist ferner der erste Arm der L-förmigen Wange 2314 angeordnet. Der erste Arm der L-förmigen Wange 2314 ist mit der dreieckigen Stütze der L-förmigen Auflage 2313 verbunden, wobei der erste Arm der L-förmigen Wange 2314 auf dem Grundkörper der L-förmigen Auflage 2313 gegenüber der dreieckigen Stütze vorspringt. In der dreieckigen Stütze der L-förmigen Auflage 2313 und dem ersten Arm der L-förmigen Wange sind weitere seitliche Aussparungen zur Gewichtsreduktion vorgesehen.

Der zweite Arm der L-förmigen Wange, der abgekantet ausgeführt ist, erstreckt sich ausgehend von einem oberen Abschnitt der dreieckigen Stütze der L-förmigen Auflage 2313 parallel zum Grundkörper der L-förmigen Auflage in Form eines Längsträgers. Auf der Innenseite des zweiten Arms der L-förmigen Wange 2314 ist eine winklige Längsausnehmung 2316 im oberen Kantenbereich ausgebildet, die sich von einem vorderen kurzen Abschnitt, der eine Begrenzung 2317 bildet, bis zur dreieckigen Stütze erstreckt. Auf der Innenseite ist der zweite Arm der L-förmigen Wange 2314 mit Ausnahme des Bereiches der winklige Längsausnehmung 2316 abgeschrägt ausgeführt. Die Abschrägung setzt sich dabei im an den zweiten Arm der L-förmigen Wange 2314 angrenzenden oberen Abschnitt der dreieckigen Stütze fort.

Wie in Figur 3A gezeigt ist, sind der erste und der zweite C-Profilträger 2311, 2312 auf dem quadratischen plattenförmigen Läufergehäuse 221 an zwei sich gegenüberliegenden Seiten durch Schraubverbindungen 24 in den Durchbohrungen 2315 der Anschlusslaschen der C-Profilträger, die in die im Eckbereich des Läufergehäuses vorgesehenen Bohrungen 2213 eingreifen, fest mit dem Läufergehäuse 221 verbunden.

Die Aufnahmeschale 232 für das Werkstück, bei der dargestellten Ausführungsform für die Reihenklemme, weist, wie in Figur 3D gezeigt ist, eine Bodenplatte 2321 mit Durchgriffsöffnungen auf. Die Bodenplatte 2321 wird an zwei gegenüberliegenden Seiten von C-förmigen Eingriffen 2332 begrenzt, die auf einer dritten Seite der Bodenplatte 2321 über einen rückwärtigen Anschlag 2233 miteinander verbunden sind. Die aus Bodenplatte 2321, den seitlichen Eingriffen 2332 und rückwärtigem Anschlag 2233 gebildete Innenform entspricht der Außenform des einzulegenden Reihenklemmen-Gehäuses. Die C-förmigen Eingriffe 2332 und der rückwärtige Anschlag 2233 der Aufnahmeschale 232 sind an der Außenseite zwischen den beiden Eingriffsarmen abgeschrägt ausgeführt.

In Figur 3A ist die vollständig zusammengesetzte Werkstückaufnahme 23, montiert auf dem Läufergehäuse 221 des Läufers 22, dargestellt. Die Aufnahmeschale 232 ist in den Rahmen 231 zwischen dem ersten und zweiten C-Profilträger 2311, 2312 eingesetzt, wobei die beiden C-förmigen Eingriffe 2332 im Bereich der Längsausnehmungen 2316 der zweiten Arme der L-förmigen Wangen 2314 die Innenseite der zweiten Arme der L-förmigen Wangen 2314 umgreifen. Der obere Eingriffsarm der C-förmigen Eingriffe 2332 der Aufnahmeschale 232 sitzt dabei jeweils auf den Längsausnehmungen 2316 der zweiten Arme der L-förmigen Wangen 2314 zwischen dem vorderen kurzen Abschnitt der zweiten Arme und der dreieckigen Stütze auf, wobei die Abschrägung in den C-förmigen Eingriffen 2332 und an dem rückwärtigen Anschlag 2233 an der Abschrägung auf der Innenseite der zweiten Arme der L-förmigen Wange 2314 beziehungsweise auf den angrenzenden oberen Abschnitten der dreieckigen Stütze anliegen.

Die Aufnahmeschale 232 kann aus dem Rahmen 231 zwischen dem ersten und zweiten C-Profilträger 2311, 2312 durch Anheben und Herausziehen nach vorne, weg von der Stütze der L-förmigen Auflage 2313, aus dem Rahmen 231 der Werkstückaufnahme 23 entnommen werden. Beim Anheben der Aufnahmeschale 232 verlassen die oberen Eingriffsarme der C-förmigen Eingriffen 2332 jeweils den Sitz in den Längsausnehmungen 2316 der zweiten Arme der L-förmigen Wangen 2314 und bewegen sich nach oben, bis die unteren Eingriffsarme der C-förmigen Eingriffe 2332 an der Unterseite der zweiten Arme der L-förmigen Wangen 2314 anschlagen.

In der Anschlagposition der unteren Eingriffsarme der C-förmigen Eingriffe 2332 befinden sich dann die obere Eingriffsarme der C-förmigen Eingriffe 2332 oberhalb der Oberseite der zweiten Arme der L-förmigen Wangen 2314. Die Aufnahmeschale 232 kann dann parallel zum zweiten Arm der L-förmigen Wangen 2314 in Richtung weg von der Stütze der L-förmigen Auflage 2313 bewegt werden, wobei die beiden C-förmigen Eingriffe 2332 die Innenseite der zweiten Arme der L-förmigen Wangen umgreifen. Die Aufnahmeschale 232 ist frei, wenn die Eingriffsarme der C-förmigen Eingriffe 2332 sich nicht mehr im Bereich der zweiten Arme der L-förmigen Wangen 2314 der ersten und zweiten C-Profilträger 2311, 2312 befinden.

Um die Aufnahmeschale 232 auf dem Rahmen 231 der Werkstückaufnahme 23 zwischen dem ersten und zweiten C-Profilträger 2311, 2312 zu positionieren, wird die Aufnahmeschale 232 parallel zum zweiten Arm der L-förmigen Wangen 2314 in Richtung auf die Stütze der L-förmigen Auflage 2313 bewegt, wobei sich die Eingriffsarme der C-förmigen Eingriffe 2332 über die Oberseite beziehungsweise Unterseite der zweiten Arme der L-förmigen Wangen 2314 der ersten und zweiten C-Profilträger 2311, 2312 schieben, bis der Anschlag 2233 der Aufnahmeschale 232 die Stütze der L-förmigen Auflage 2313 erreicht hat. Die beiden C-förmigen Eingriffe 2332 finden sich dann im Bereich der Längsausnehmungen 2316.

Durch Absenken der Aufnahmeschale 232 werden die oberen Eingriffsarme der C-förmigen Eingriffe 2332 nach unten bewegt, bis sie jeweils in den winkligen Längsausnehmungen 2316 der zweiten Arme der L-förmigen Wangen 2314 aufsitzen. In der Figur 3A ist die Aufnahmeschale in der abgesenkten Position dargestellt. Die Abschrägung an der Außenseite der C-förmigen Eingriffe 2332 und am rückwärtigen Anschlag 2233 und die Abschrägung an den zweiten Armen der L-förmigen Wangen 2314 und auf den angrenzenden oberen Abschnitten der dreieckigen Stütze sorgen dabei für ein exaktes Positionieren und genügend Spiel bei dem Einführen und Herausziehen der Aufnahmeschale 232 in der angehobenen Position.

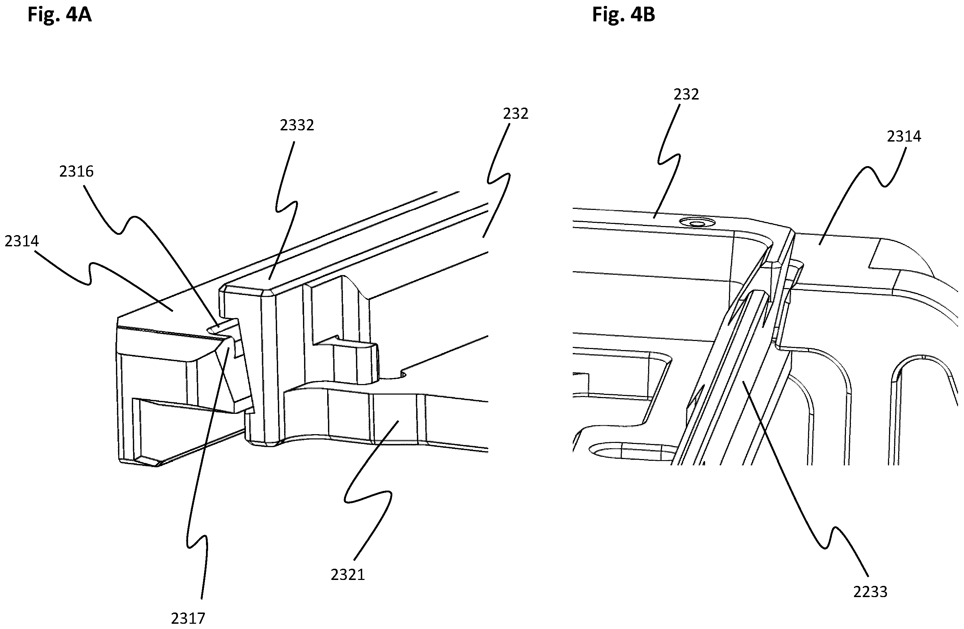

Figur 4A zeigt einen seitlichen Ausschnitt und Figur 4B einen rückwärtigen Ausschnitt der Werkstückaufnahme 23 aus Figur 3 vergrößert während der Positionierung der Aufnahmeschale 232 auf den als Längsträger dienenden zweiten Armen der L-förmigen Wangen 2314. Die Aufnahmeschale 232 ist dabei angehoben, um vom zweiten Arm der L-förmigen Wangen 2314 abgezogen beziehungsweise auf den zweiten Arm der L-förmigen Wangen 2314 aufgeschoben zu werden. Durch die Abschrägung an der Außenseite der C-förmigen Eingriffe 2332 und die Abschrägung an den zweiten Armen der L-förmigen Wangen 2314 bewegt sich die Aufnahmeschale 232 automatisch beim Absenken der Aufnahmeschale 232 in die vorgesehene Position auf den zweiten Arm der L-förmigen Wangen 2314, um die Aufnahmeschale 232 seitlich zu fixieren. Gleichzeitig werden beim Absenken der Aufnahmeschale durch das Zusammenspiel der Abschrägung am rückwärtigen Anschlag 2233 der Aufnahmeschale und der Abschrägung auf dem oberen Abschnitt der dreieckigen Stütze des ersten C-Profilträgers 2311 und des zweiten C-Profilträgers 2312 die C-förmigen Eingriffe 2332 der Aufnahmeschale 232 in den Längsausnehmungen 2316 an den zweiten Armen der L-förmigen Wangen 2314 jeweils gegen die die Längsausnehmung 2316 festlegende Begrenzung 2317 geschoben, sodass die Aufnahmeschale 232 auch in Vor-Rück-Richtung fixiert ist.

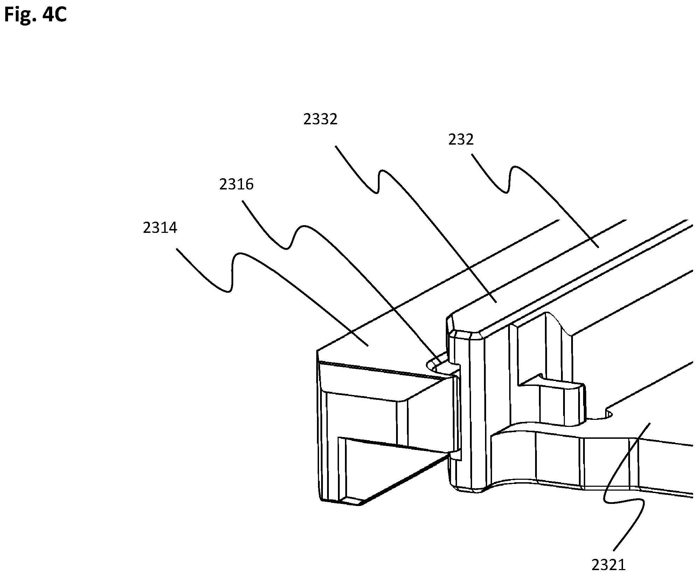

Figur 4C zeigt eine alternative Ausführungsform, bei der auf die Abschrägung unterhalb der Längsausnehmung 2316 der zweiten Arme der L-förmigen Wangen 2314 verzichtet ist. Entsprechend fehlt auch die Abschrägung an der Außenseite der C-förmigen Eingriffe 2332 der Aufnahmeschale 232.

Das mit dem Läufer transportierte Werkstück kann eine beliebige Form aufweisen. Als Beispiel für Werkstücke, die mit dem Läufer transportiert und in einer Bearbeitungsstation bearbeitet werden können, zählen Elektronikkomponenten, wie die bereits genannte Reihenklemme, Bauteile für Mikrocomputer, Mobiltelefone etc., Werkstücke können auch Komponenten aus einem Fertigungsprozess wie Schrauben, Lager etc., Flüssigkeitsbehälter wie Flaschen, Dosen, Reagenzgläser etc., Medikamente oder Lebensmittel sein.

Um das auf dem Läufer angeordnete Werkstück zu bearbeiten, sind, wie in Figur 1 gezeigt ist, an einem Rand entlang der Transportebene Bearbeitungsstationen angeordnet. Die Bearbeitungsstation weist einen Grundkörper auf, der angrenzend an ein Statormodul angeordnet ist und vorzugsweise von dem Statormodul unabhängig gelagert ist. An dem Grundkörper ist ein Werkzeug bewegbar angeordnet, mit dem eine Bearbeitung des Werkstücks erfolgen kann. Die Bearbeitungsstation kann dabei eine beliebige verfahrenstechnische und/oder fertigungstechnische Bearbeitung durchführen. Bearbeitungsstationen können Stationen zur mechanischen Bearbeitung wie Bohren, Fräsen, Schneiden, etc., Stationen zur Assemblierung von Bauteilen mit fügetechnischen Maßnahmen wie Reihenklemmen, Pressen, Ziehen, Schrauben, Schweißen, Kleben, etc., oder Stationen für verfahrenstechnische Prozesse wie Füllen, Mischen, Reinigen, etc. oder Stationen zum elektrischen Kontaktieren, elektrischen Testen, Programmieren von integrierten Schaltkreisen, etc. sein.

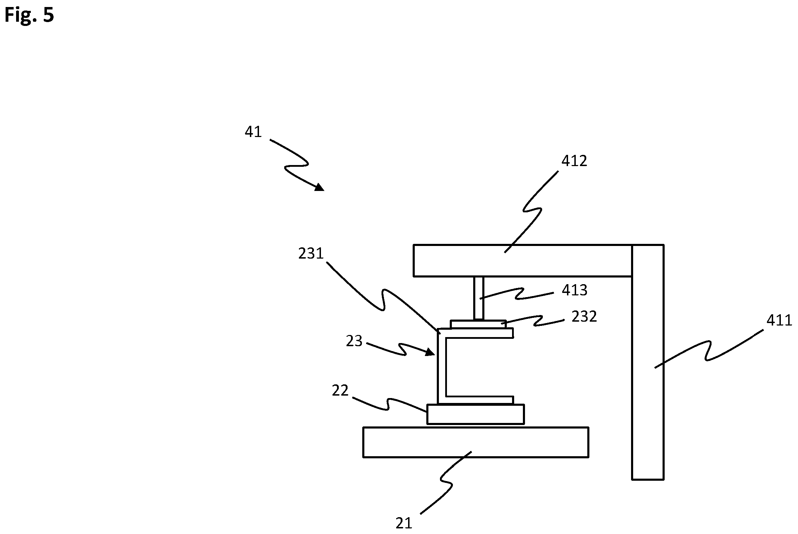

Figur 5 zeigt schematisch im Querschnitt eine Typ-1-Bearbeitungsstation 41, die einen Grundkörper 411 mit einem Arm 412, an dem ein Werkzeug 413 angeordnet ist, aufweist.

Der Läufer 22 mit der Werkstückaufnahme 23, bei der der Rahmen 231 die Aufnahmeschale 232 mit dem Werkstück trägt, schwebt, während das Werkzeug 413 der Typ-1-Bearbeitungsstation 41 das Werkstück in der Aufnahmeschale 232 der Werkstückaufnahme 23 bearbeitet, über dem Statormodul 21.

Der Läufer 22 ist im schwebenden Zustand bei der Bearbeitung weiterhin voll beweglich, so dass der Läufer 22 laufend neu positioniert werden kann. Dies kann dazu genutzt werden, den Bearbeitungsvorgang zu unterstützen, im dem über die Läuferbewegung das Werkstück für die Bearbeitung durch das Werkzeug bewegt wird. Die Bearbeitung des Werkstücks bei schwebendem Läufer ist dann möglich, wenn geringe Prozesskräfte und - momente auf das Werkstück beim Bearbeiten durch das Werkzeug der Bearbeitungsstation wirken.

Eine Typ-1-Bearbeitungsstation, bei der das Werkstück bei schwebendem Läufer bearbeitet wird, kann bei einer Reihenklemmen-Fertigung beispielsweise eine Lötstation sein, bei der Lötkontakte an der Reihenklemme ausgeführt werden. Beim Lötvorgang in der Typ-1-Bearbeitungsstation kann der schwebende Läufer 22 dabei so in Bezug auf das Lötwerkzeug verfahren werden, dass nacheinander verschiedene Kontakte auf der Reihenklemme unter dem Lötwerkzeug positioniert werden.

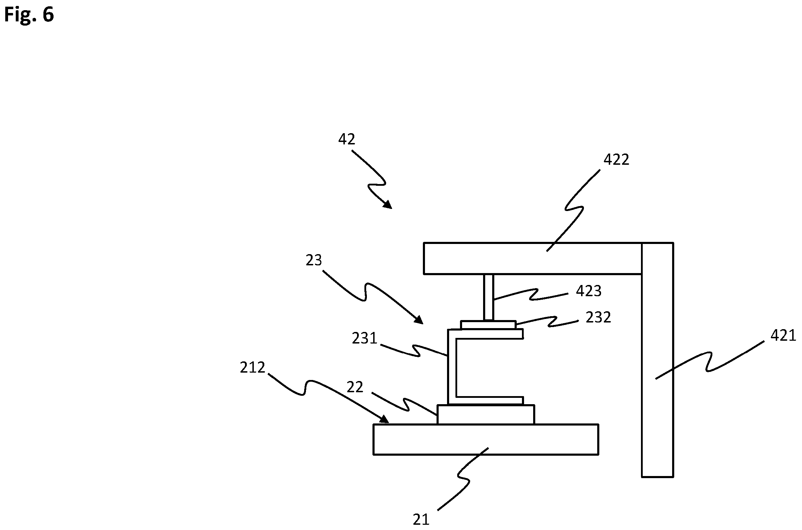

Figur 6 zeigt schematisch im Querschnitt eine Typ-2-Bearbeitungsstation 42, bei der der Läufer 22 mit der Werkstückaufnahme 23, bei der der Rahmen 231 die Aufnahmeschale 232 mit dem Werkstück trägt, während des Bearbeitungsvorgangs auf der Statorfläche 212 abgesetzt ist. Die Typ-2-Bearbeitungsstation 42 entspricht vom Aufbau der Typ-1-Bearbeitungsstation 41 und weist einen zweiten Grundkörper 421 mit einem zweiten Arm 422, an dem ein zweites Werkzeug 423 angeordnet ist, auf.

Der Läufer 22 mit der Werkstückaufnahme 23, deren Aufnahmeschale 232 das Werkstück enthält, wird unter dem Werkzeug 423 positioniert. Dann wird der Läufer 22 durch eine entsprechende Bewegungssteuerung auf der Statorfläche 212 abgesetzt, um mit dem Werkzeug das Werkstück in der Aufnahmeschale 232 zu bearbeiten. Typ-2-Bearbeitungsstationen werden bei mittleren Prozesskräften und -momenten eingesetzt, bei dem die Planarmotor-Kräfte und -Momente nicht ausreichen, um die während der Bearbeitung des Werkstücks auftretenden Belastungen auf dem Läufer immer zu kompensieren und so zu verhindern, dass der Läufer ungewollt auf der Statorfläche aufschlägt und diese beschädigt.

Eine Typ-2-Bearbeitungsstation in der Reihenklemmen-Fertigung kann beispielsweise eine Kontaktierungsstation sein, bei der seitliche Kommunikationskontakte der Reihenklemme, die als Federkontakte ausgebildet sind, kontaktiert werden, um eine entsprechende Software aufzuspielen.

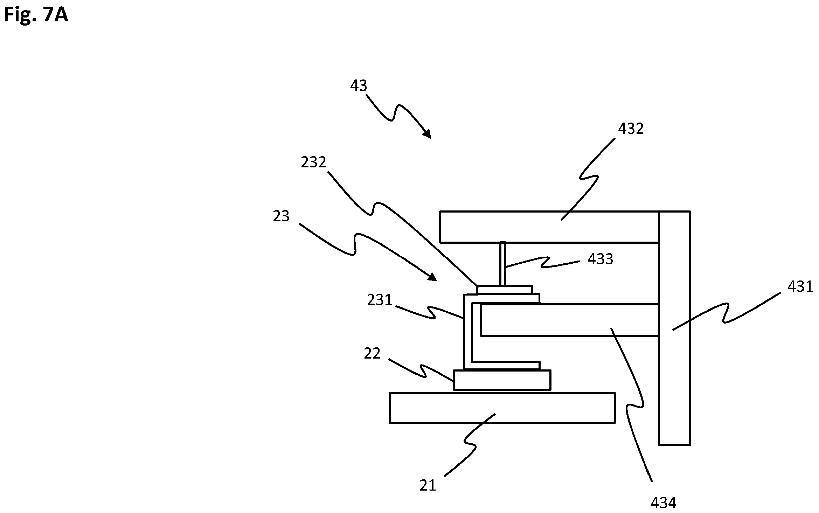

Figur 7A zeigt eine erste Ausführungsform einer Typ-3-Bearbeitungsstation 43 schematisch im Querschnitt, wobei zusätzlich zu einem dritten Grundkörper 431 und einem dritten Arm 432 mit einem dritten Werkzeug 433, die auch bei der Typ-1-Bearbeitungsstation 41 beziehungsweise Typ-2-Bearbeitungsstation 42 vorgesehen sind, ein vorkragender Rahmen 434 am dritten Grundkörper 431 angeordnet ist. Der vorkragende Rahmen 434 der Typ-3-Bearbeitungsstation 43 dient zur Abstützung der Aufnahmeschale 232 mit dem Werkstück, nachdem der Läufer 22 mit der Werkzeugaufnahme 23 in die gewünschte Position gefahren ist. Es ist auch möglich, dass ein anderer Teil der Werkzeugaufnahme 23 durch den vorkragenden Rahmen 434 der Typ-3-Bearbeitungsstation 43 abgestützt wird, wie beispielsweise der zweite Arm der L-förmigen Wange 2314.

Dazu wird der Läufer 22 so gesteuert, dass die Flughöhe des Läufers es ermöglicht, die Aufnahmeschale 232 mit dem Werkstück über dem vorkragenden Rahmen 434 der Typ-3-Bearbeitungsstation 43 zu bewegen, bis die Übernahmeposition der Aufnahmeschale 232 über dem vorkragende Rahmen 434, in der dann das Werkstück in der Aufnahmeschale 232 durch das Werkzeug 433 bearbeitet werden soll, erreicht ist. Dann wird der Läufer 23 abgesenkt, bis der vorkragende Rahmen 434 die Aufnahmeschale 232 mit dem Werkstück stützt. Alternativ kann auch der vorkragende Rahmen 434 der Typ-3-Bearbeitungsstation 43 angehoben werden, bis der vorkragende Rahmen 434 die Aufnahmeschale 232 trägt.

In der Stützposition, wenn der vorkragende Rahmen 434 der Typ-3-Bearbeitungsstation 43 in Eingriff mit der Aufnahmeschale 232 kommt, hebt die Aufnahmeschale 232 von den zweiten Armen der L-förmigen Wangen 2314 ab, wobei sich die oberen Eingriffsarme der C-förmigen Eingriffe 2332 der Aufnahmeschale 232 aus den Längsausnehmungen 2316 der zweiten Arme der L-förmigen Wangen 2314 heraus bewegen, wie bezogen auf die beiden vorstehend beschriebenen Ausführungsformen der Werkstückaufnahme 23 in Figur 4A beziehungsweise Figur 4B erläutert ist. Wenn sich die oberen Eingriffsarme der C-förmigen Eingriffe 2332 dann oberhalb der Oberseite der zweiten Arme der L-förmigen Wange 2314 befinden, kann mittels Herausfahrens des Läufers 22 die Aufnahmeschale 232 von dem Rahmen 231 der Werkstückaufnahme 23 getrennt werden. Eine Bearbeitung des Werkstückes ist auch möglich, wenn der Läufer 22 nicht herausfährt und die Aufnahmeschale 232 in der Werkstückaufnahme 23 verbleibt. Auch in diesem Fall können die Prozesskräfte effizient durch den vorkragenden Rahmen 434 aufgenommen werden.

Nach der Bearbeitung des Werkstücks kann dann durch ein Vorgehen in umgekehrte Reihenfolge der Rahmen 231 der Werkstückaufnahme 23 des Läufers 22 die Aufnahmeschale 232 mit dem bearbeiteten Werkstück wieder aufnehmen.

Der vorkragende Rahmen 434 der Typ-3-Bearbeitungsstation 43 kann in der Stützposition der Aufnahmeschale auch hohe Prozesskräfte und -momente bei der Werkstückbearbeitung vollständig aufnehmen, die bei einem abgesetzten Läufer wie in der Typ-2-Bearbeitungsstation 42 die Statorfläche 212 beschädigt werden könnten.

Im Rahmen der Reihenklemmen-Fertigung kann eine solche Typ-3-Bearbeitungstation beispielsweise eine Presse sein, mit der das Gehäuse der Reihenklemme verpresst wird.

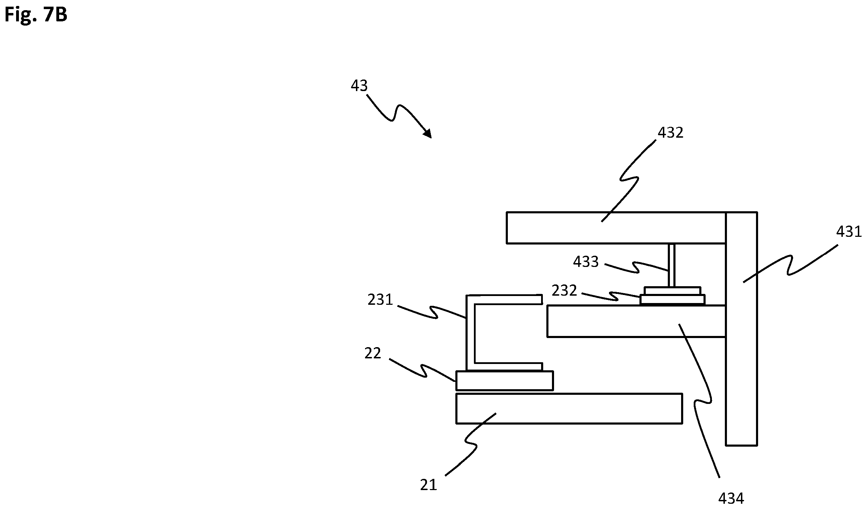

Alternativ zu der in Figur 7A gezeigten Ausführungsform der Typ-3-Bearbeitungsstation 43 ist in Figur 7B eine weitere Ausführungsform der Typ-3-Bearbeitungsstation 43 gezeigt, bei der der vorkragende Rahmen 434 ausgelegt ist, die Aufnahmeschale 232 mit dem Werkstück in der Typ-3-Bearbeitungsstation auf dem vorkragenden Rahmen 434 zu verfahren, beziehungsweise die Aufnahmeschale 232 mit dem Werkstück in die Typ-3-Bearbeitungsstation 43 einzuschleusen. Figur 7B zeigt diese Ausgestaltung wiederum in schematischer Form im Querschnitt.

Der Vorgang der Werkstückbearbeitung erfolgt dabei so, dass der Läufer 22 mit der Werkstückaufnahme 23 in einer Flughöhe an die Typ-3-Bearbeitungsstation 43 herangefahren wird, dass die Aufnahmeschale 232 mit dem Werkstück über dem vorkragenden Rahmen 434 liegt, wobei der Läufer 22 soweit mit den C-förmigen Profilträgern 2311, 2312 des Rahmens 231 der Werkstückaufnahme 23 über den vorkragenden Rahmen 434 vorgeschoben wird, bis die Übernahmeposition der Aufnahmeschale 232 erreicht ist.

Der Läufer 22 wird dann abgesenkt, so dass der vorkragende Rahmen 434 der Typ-3-Bearbeitungsstation 43 in Eingriff mit der Aufnahmeschale 232 kommt. Die Flughöhe des Läufers 22 wird dabei so verändert, dass der vorkragende Rahmen 434 die Aufnahmeschale 232 anhebt und die oberen Eingriffsarme der C-förmigen Eingriffe 2332 der Aufnahmeschale 232 sich aus den Längsausnehmungen 2316 der zweiten Arme der L-förmigen Wangen 2314 heraus bewegen, bis sich die oberen Eingriffsarme der C-förmigen Eingriffe 2332 oberhalb der Oberseite der zweiten Arme der L-förmigen Wange 2314 befinden. Alternativ kann die Aufnahmeschale 232 auch von dem vorkragenden Rahmen 434 der Typ-3-Bearbeitungsstation 43 angehoben werden, bis der vorkragende Rahmen 434 die Aufnahmeschale 232 in die vorstehend beschriebene Position gebracht hat.

In dieser Position kann dann die Aufnahmeschale 232 von dem Rahmen 231 der Werkstückaufnahme 23 durch Abziehen der C-förmigen Eingriffe 2332 der Aufnahmeschale 232 von den zweiten Armen der L-förmigen Wangen 2314 des Rahmens 231 der Werkstückaufnahme 23 mittels des vorkragenden Rahmens 434 der Typ-3-Bearbeitungsstation 43 entfernt werden.

Im vorkragenden Rahmen 434 der Typ-3-Bearbeitungsstation 43 kann weiter eine Führungsstruktur, beispielsweise eine Rollenführung, vorgesehen sein, die in Eingriff mit dem Werkstückträger 23 kommt, um den Läufer 22 bei der Übergabe der Aufnahmeschale 232 in Position zu halten. Anschließend kann dann, wie in Figur 7B gezeigt ist, auch der Läufer 22 noch in eine Warteposition vor dem vorkragenden Rahmen 434 der Typ-3-Bearbeitungsstation 43 verfahren werden.

Durch ein Vorgehen in umgekehrter Reihenfolge kann nach der Bearbeitung des Werkstücks der Rahmen 231 der Werkstückaufnahme 23 des Läufers 22 die Aufnahmeschale 232 mit dem bearbeiteten Werkstück wieder aufnehmen.

In der Reihenklemmen-Fertigung kann die Typ-3-Bearbeitungsstation beispielsweise genutzt werden, um in der Bearbeitungsstation die elektrischen Kontakte der Reihenklemme gleichzeitig zu kontaktieren und zu prüfen.

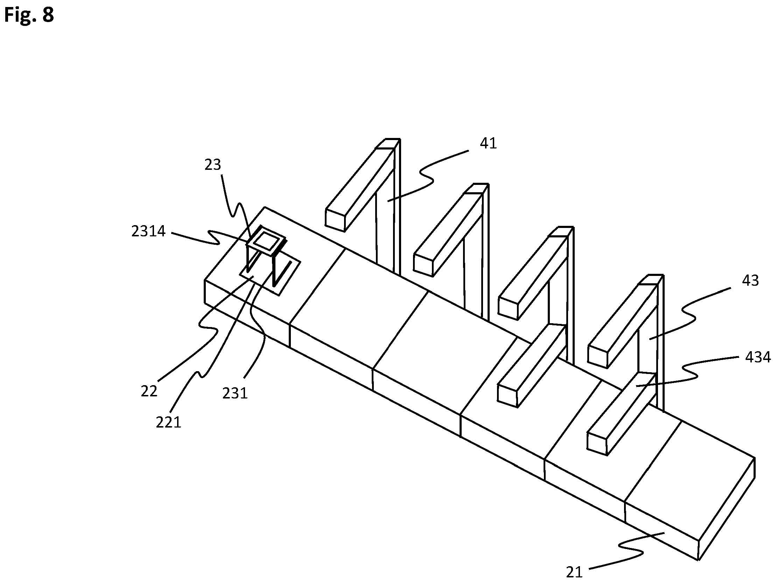

Figur 8 zeigt die Möglichkeit, den Läufer 22 mit der Werkstückaufnahme 23, die den Rahmen 231 mit zwei C-förmigen Profilträgern 2311, 2312 aufweist, längs eines geraden Transportwegs auf der Transportebene zu verfahren, auch dann, wenn Hindernisse wie der vorkragende Rahmen 434 der Typ-3-Bearbeitungsstationen 43 sich über dem aus den Statormodulen 21 gebildeten Transportweg befinden.

In Figur 8 ist in schematischer Darstellung eine Transportebene mit fünf in Reihe angeordneten Statormodulen 21, entlang der zwei Typ-1-Bearbeitungsstationen und dann zwei Typ-3-Bearbeitungsstationen mit vorkragenden Rahmen 434 vorgesehen sind, gezeigt. Durch entsprechende Einstellung der Flughöhe des Läufers 22 kann die Werkstückaufnahme 23 so positioniert werden, dass, wenn der Läufer in Figur 8 über die fünf in Reihe angeordneten Statormodulen 21 gefahren wird, die vorkragenden Rahmen 434 der zwei Typ-3-Bearbeitungsstationen sich immer im Bereich zwischen dem Läufergehäuse 221 und den zweiten Armen der L-förmigen Wangen 2314 des Rahmens 231 befinden, ohne jedoch in Kontakt mit den ersten Armen der L-förmigen Wangen 2314 zu kommen.

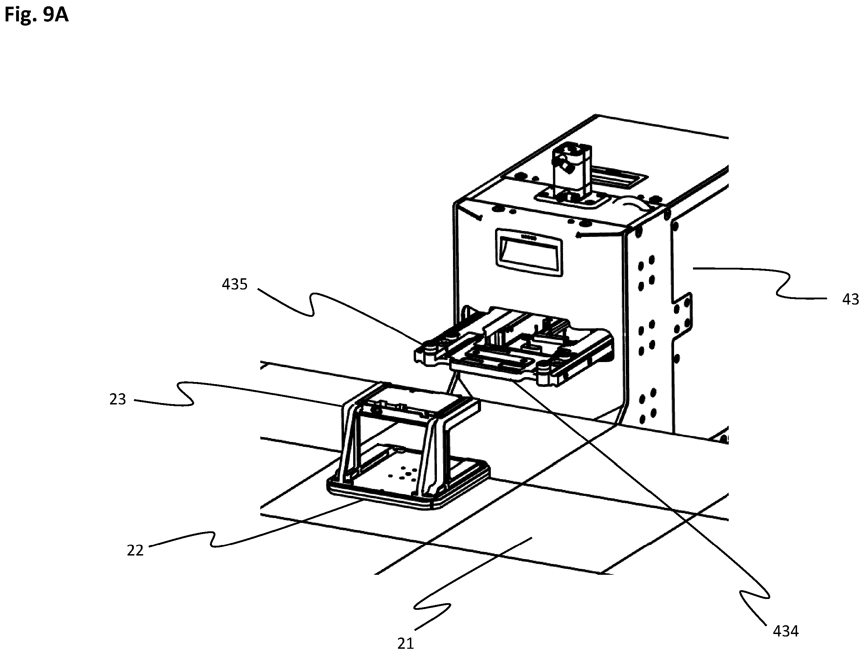

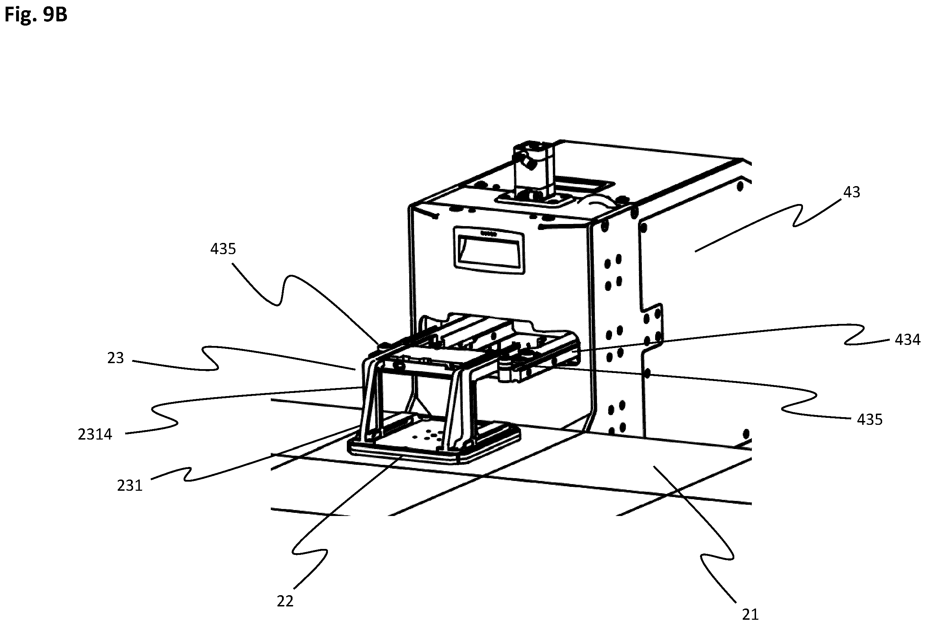

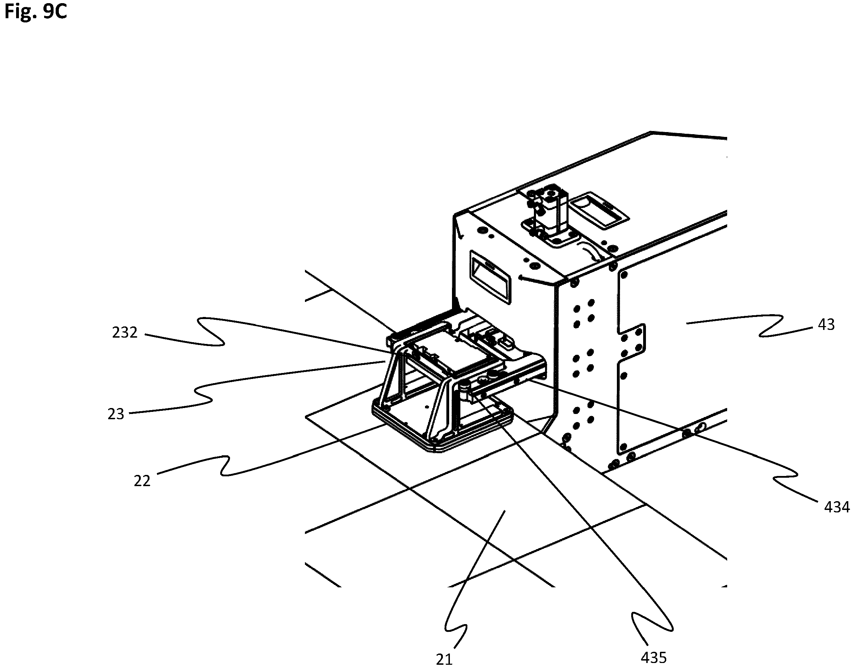

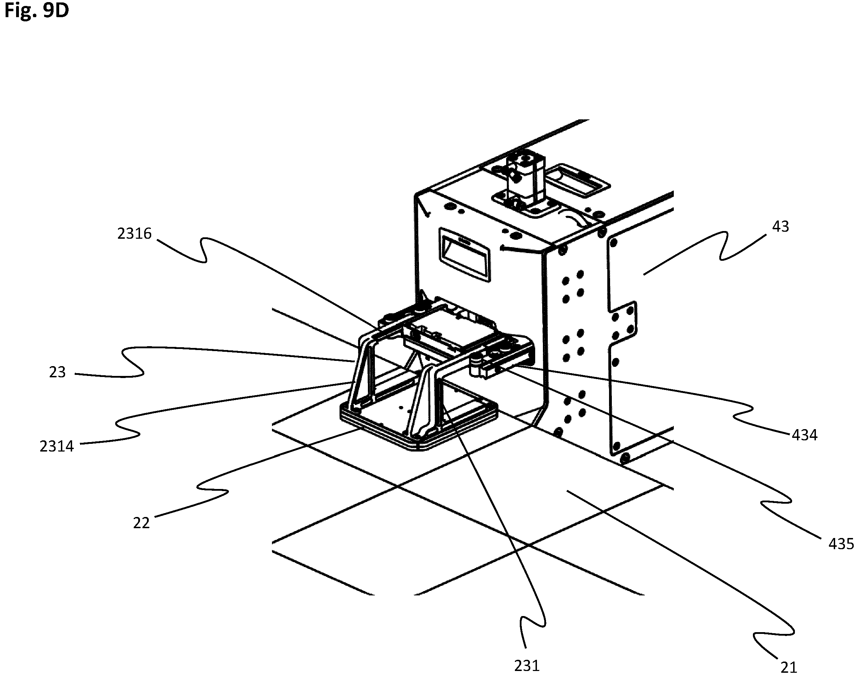

Figur 9 zeigt für die Reihenklemmen-Fertigung einen Bearbeitungsvorgang mit einer Typ-3-Bearbeitungsstation 43, bei der die Reihenklemme in die Bearbeitungsstation eingeschleust wird. Figur 9A bis Figur 9D sind dabei nacheinander aufgenommene Momentbilder des Ablaufs, bei dem die Reihenklemme vom Läufer 22 mit der Werkstückaufnahme 23 an die Typ-3-Bearbeitungsstation 43 herangefahren, dann der Bearbeitungsvorgang ausgeführt und anschließend die Reihenklemme wieder von der Typ-3-Bearbeitungsstation vom Läufer wegverfahren wird.

Figur 9A zeigt den Läufer 22 bei der Anfahrt auf die Typ-3-Bearbeitungsstation 43, die einen vorkragenden Rahmen 434 mit zwei Armen, die jeweils auf der Innenseite eine seitliche Rollenführung 435 tragen, aufweist.

In Figur 9B ist dann als nächste Momentaufnahme dargestellt, wie die zweiten Arme der L-förmigen Wange 2314 des Rahmens 231 der Werkstückaufnahme 23 auf dem Läufer 22 in Eingriff mit dem vorkragenden Rahmen 343 der Typ-3-Bearbeitungsstation 43 kommen. Dabei werden die beiden Außenseiten der zweiten Arme der L-förmigen Wangen 2314 durch die Rollen der seitlichen Rollenführung 435 auf der Innenseite der Arme des vorkragenden Rahmens 434 der Typ-3-Bearbeitungsstation 43 geführt, wodurch sich beim weiteren Einfahren der Werkstückaufnahme 23 auf dem Läufer 22 in den vorkragenden Rahmen 231 eine verbesserte Positionierung ergibt.

Figur 9C zeigt dann in der Aufsicht den Läufer 22, wenn die Werkstückaufnahme 23 so zwischen die Arme des vorkragenden Rahmens 434 der Typ-3-Bearbeitungsstation 43 eingefahren ist, dass eine Übernahmeposition der Aufnahmeschale 232 erreicht ist. Der vorkragende Rahmen 434 ist dabei so ausgeführt, dass in der Übernahmeposition Rahmenelemente des vorkragende Rahmens 434 in Eingriff mit der Aufnahmeschale 232 kommen beziehungsweise gebracht werden können, um die Aufnahmeschale 232 mit der Reihenklemme zu fixieren.

Dann kann, wie in Figur 9D gezeigt ist, der vorkragende Rahmen 434 in die Typ-3-Bearbeitungsstation 43 eingezogen werden, so dass die C-förmigen Eingriffe der Aufnahmeschale aus den zweiten Armen der L-förmigen Wangen 2314 herausgezogen werden.

Nach Bearbeitung der Reihenklemme in der Typ-3-Bearbeitungsstation kann dann in umgekehrter Weise der Läufer 22 mit der Werkstückaufnahme 23 die Aufnahmeschale 232 wieder aufnehmen. Anschließend kann dann der Läufer 22 die bearbeitete Reihenklemme zu weiteren Bearbeitungsstationen beziehungsweise zur Handhabungseinrichtung zurückbringen.

### Bezugszeichenliste

- 1: Fertigungsplattform

- 2: Transporteinrichtung

- 21: Statormodul
- 211: Statormodul-Gehäuse
- 212: Statorfläche
- 213: Statoreinheit
- 214: Spulengruppe

- 22: Läufer
- 221: Läufergehäuse
- 2211: Zentralkörper
- 2212: Stoßfänger
- 2213: Bohrung
- 222: Permanentmagnet-Einheit

- 23: Werkstückaufnahme
- 231: Rahmen
- 2311: erster C-Profilträger
- 2312: zweiter C-Profilträger
- 2313: Auflage
- 2314: Wange
- 2315: Durchbohrungen
- 2316: Längsausnehmung
- 2317: Begrenzung
- 232: Aufnahmeschale
- 2321: Bodenplatte
- 2332: Eingriff
- 2233: rückwärtiger Anschlag

- 24: Schraubverbindung

- 25: Steuereinrichtung

- 3: Werkstückspeicher
- 31: Handhabungseinrichtung
- 311: Tragegestell
- 312: erster Bestückungsautomat
- 313: zweiter Bestückungsautomat
- 32: erste Transportauflage
- 33: zweite Transportauflage
- 34: Werkstückgebinde

- 4: Bearbeitungsstation
- 41: Typ-1-Bearbeitungsstation/ Kontaktierungsstation
- 411: Grundkörper
- 412: Arm
- 413: Werkzeug
- 42: Typ-2-Bearbeitungsstation/ Lötstation
- 421: zweiter Grundkörper
- 422: zweiter Arm
- 423: zweites Werkzeug
- 43: Typ-3-Bearbeitungsstation/ Presse
- 431: dritter Grundkörper
- 432: dritter Arm
- 433: drittes Werkzeug
- 434: vorkragender Rahmen
- 435: Rollenführung

## Patentansprüche

1. Läufer (22) für ein flexibles Fertigungssystem,
mit einem plattenförmigen Läufergehäuse (221) mit einer Permanentmagnet-Anordnung zum Erzeugen eines Läufermagnetfeldes und einer auf dem Läufergehäuse (221) angeordneten Werkstückaufnahme (23),
wobei die Werkstückaufnahme (23) einen Rahmen (231) mit zwei L-förmigen Wangen (2314) und einer Aufnahmeschale (232) mit einer Innenform zum Einlegen eines Werkstücks umfasst, wobei jede L-förmige Wange (2314) einen ersten Arm zum Befestigen auf dem plattenförmigen Läufergehäuse (221) und einen von dem ersten Arm vorkragenden zweiten Arm, der im Wesentlichen parallel zum plattenförmigen Läufergehäuse (221) ausgerichtet ist, umfasst,
wobei die zweiten Arme der L-förmigen Wangen (2314) einander gegenüberliegend jeweils Längsausnehmungen (2316) zum seitlichen Abstützen der Aufnahmeschale (232) umfassen.

2. Läufer nach Anspruch 1, wobei der Rahmen der Werkstückaufnahme (23) einen ersten und einen zweiten C-Profilträger (2311, 2312) umfasst, die spiegelbildlich ausgeführt sind.

3. Läufer nach Anspruch 2,
wobei der erste und der zweite C-Profilträger (2311, 2312) jeweils einen Längsträger aufweisen, wobei auf der Innenseite des Längsträgers eine winklige Längsausnehmung (2316) im oberen Kantenbereich ausgebildet ist,
wobei die Aufnahmeschale (232) an zwei gegenüberliegenden Seiten C-förmige Eingriffe (2332) aufweist, wobei der obere Eingriffsarm des C-förmigen Eingriffs (2332) ausgelegt ist, in eine winklige Längsausnehmung (2316) auf der Innenseite des Längsträgers einzugreifen.

4. Läufer nach Anspruch 3, wobei auf der Innenseite des Längsträgers wenigstens unterhalb der Längsausnehmung (2316) und auf der Außenseite der C-förmigen Eingriffe (2332) der Aufnahmeschale (232) jeweils Abschrägungen vorgesehen sind.

5. Flexibles Fertigungssystem mit einer Fertigungsplattform (1), auf der eine Transporteinrichtung (2) und eine Mehrzahl an Bearbeitungsstationen (41, 42, 43) angeordnet sind, und
einer Steuereinrichtung (25),
wobei die Transporteinrichtung (2) eine Mehrzahl von Statormodulen (21) und wenigstens einen Läufer (22) nach Anspruch 1 zum Transportieren von Werkstücken umfasst, wobei jedes Statormodul (21) ein Statormodul-Gehäuse (211) mit einer Statorfläche (212) und einer unterhalb der Statorfläche angeordneten Spulenanordnung zum Erzeugen eines Statormagnetfeldes umfasst,
wobei die Mehrzahl von Statormodulen (21) auf der Fertigungsplattform (1) einen Verbund mit einer aus den Statorflächen (212) gebildeten Transportebene zum Verketten der Bearbeitungsstationen (41, 42, 43), die an die Transportebene angrenzend angeordnet sind, ausbilden,
wobei die Steuereinrichtung (25) ausgelegt ist, Steuersignale an den Verbund aus der Mehrzahl von Statormodulen (21) auszugeben und die Statormodule (21) ausgelegt sind, die Spulengruppen der zugehörigen Statoreinheiten entsprechend den Steuersignalen zu bestromen, um den Läufer (22) auf der Transportebene zu den Bearbeitungsstationen (41, 42, 43) zu bewegen,
wobei der Läufer (22) oberhalb der Transportebene mittels der Wechselwirkung von Statorfeld und Läufermagnetfeld in eine erste Richtung und/oder eine zweite Richtung und/oder eine dritte Richtung bewegbar ist,
wobei die erste Richtung und die zweite Richtung parallel zur Transportebene und die dritte Richtung senkrecht zur Transportebene orientiert sind,
wobei jede Bearbeitungsstation (41, 42, 43) ein Werkzeug zum Bearbeiten des Werkstücks in der Aufnahmeschale (232) der Werkstückaufnahme (23) des Läufers umfasst, wobei wenigstens eine Bearbeitungsstation einen über die Transportebene vorkragenden Rahmen (434) zum Ablegen der Aufnahmeschale (232) der Werkstückaufnahme (23) des Läufers umfasst,
wobei die Steuereinrichtung (25) ausgelegt ist, im Rahmen der Bearbeitung des Werkstücks an der Bearbeitungsstation mit dem vorkragenden Rahmen (434) den Läufer (22) mit einem in der Aufnahmeschale (232) befindlichen Werkstück mittels Steuersignalen auf dem Verbund aus der Mehrzahl von Statormodulen (21) so zu bewegen, dass der vorkragende Rahmen (434) der Bearbeitungsstation in Eingriff mit der von den zweiten Armen der L-förmigen Wangen (2314) des Rahmens der Werkstückaufnahme (23) abgestützten Aufnahmeschale (232) kommt, um die Aufnahmeschale (232) aus den Längsausnehmungen (2316) der zweiten Arme der L-förmigen Wangen (2314) des Rahmens der Werkstückaufnahme (23) vor der Bearbeitung des Werkstücks durch das Werkzeug der Bearbeitungsstation abzuheben.

6. Flexibles Fertigungssystem nach Anspruch 5 , wobei die Steuereinrichtung (25) ausgelegt ist, den Läufer (22) mit der Werkstückaufnahme (23) und dem in der Aufnahmeschale (232) befindlichen Werkstück mittels Steuersignalen auf dem Verbund aus der Mehrzahl von Statormodulen (21) so zu bewegen, dass der Läufer (22) an der den über die Transportebene vorkragende Rahmen aufweisenden Bearbeitungsstation seitlich vorbeigeführt wird, wobei der vorkragende Rahmen in den Freiraum zwischen dem Läufergehäuse und der von der Werkstückaufnahme (23) seitlich abgestützten Aufnahmeschale (232) hineinragt.

7. Flexibles Fertigungssystem nach Anspruch 5 oder 6, wobei die Steuereinrichtung (25) ausgelegt ist, den Läufer (22) beim Bearbeiten des Werkstücks in der Aufnahmeschale (232) durch das Werkzeug der Bearbeitungsstation im schwebenden Zustand zu halten.

8. Flexibles Fertigungssystem nach Anspruch 5 oder 6, wobei die Steuereinrichtung (25) ausgelegt ist, den Läufer (22) vor dem Bearbeiten des Werkstücks in der Aufnahmeschale (232) durch das Werkzeug der Bearbeitungsstation auf der Statorfläche abzusetzen.

9. Flexibles Fertigungssystem nach Anspruch 5 oder 6, wobei die Steuereinrichtung (25) ausgelegt ist, den Rahmen (231) und/ oder die Aufnahmeschale (232) der Werkstückaufnahme (23) vor dem Bearbeiten des Werkstücks auf dem vorkragenden Rahmen (434) der Bearbeitungsstation durch ein Absenken des Läufers (22) über dem vorkragenden Rahmen abzulegen.

10. Flexibles Fertigungssystem nach Anspruch 9, wobei der vorkragende Rahmen (434) der Bearbeitungsstation ausgebildet ist, die abgelegte Aufnahmeschale (232) zu verfahren.

11. Flexibles Fertigungssystem nach einem der Ansprüche 5 bis 10, wobei auf der Fertigungsplattform (1) ein Werkstückspeicher (3) vorgesehen ist, der eine Handhabungseinrichtung (31) zum Überführen des Werkstücks aus dem Werksstückspeicher in die Aufnahmeschale (232) beziehungsweise zum Überführen des Werkstücks aus der Aufnahmeschale (232) in den Werksstückspeicher umfasst.

## Claims

1. A rotor (22) for a flexible manufacturing system
having a plate-shaped rotor housing (221) with a permanent magnet arrangement for generating a rotor magnetic field and a workpiece holder (23) arranged at the rotor housing (221),
wherein the workpiece holder (23) includes a frame (231) having two L-shaped cheeks (2314) and a receiving tray (232) having an interior shape for inserting a workpiece, wherein each L-shaped cheek (2314) comprises a first arm for fastening on the plate-shaped rotor housing (221) and a second arm projecting from the first arm, the second arm being essentially aligned in parallel with regard to the plate-shaped rotor housing (221),
wherein the second arms of the L-shaped cheeks (2314) each comprise longitudinal recesses (2316) for lateral support of the receiving tray (232) on opposite sides of each other.

2. The rotor (22) according to claim 1, wherein the frame of the workpiece holder (23) comprises a first and a second C-profile carrier (2311, 2312), which are embodied as mirror images.

3. The rotor (22) according to claim 2,
wherein the first and second C-profile carriers (2311, 2312) each have a longitudinal beam, wherein an angular longitudinal recess (2316) is embodied on the inside of the longitudinal beam in the upper edge region,
the receiving tray (232) having C-shaped engagements (2332) on two opposite sides, the upper engagement arm of the C-shaped engagement (2332) being embodied to engage in an angled longitudinal recess (2316) on the inside of the longitudinal member.

4. The rotor (22) according to claim 3, wherein bevels are provided on the inside of the longitudinal beam at least below the longitudinal recess (2316) and on the outside of the C-shaped engagements (2332) of the receiving tray (232).

5. A flexible manufacturing system
having a manufacturing platform (1) on which a transport device (2) and a plurality of processing stations (41, 42, 43) are arranged, and
a controller (25),
wherein the transport device (2) comprises a plurality of stator modules (21) and at least one rotor (22) according to claim 1 for transporting workpieces,
wherein each stator module (21) comprises a stator module housing (211) having a stator surface (212) and a coil arrangement arranged below the stator surface for generating a stator magnetic field,
wherein the plurality of stator modules (21) on the manufacturing platform (1) embody a compound having a transport level formed by the stator surfaces (212) for linking the processing stations (41, 42, 43) arranged adjacent to the transport level,
wherein the controller (25) is configured to output control signals to the network of the plurality of stator modules (21) and the stator modules (21) are configured to energize the coil groups of the associated stator assemblies in accordance with the control signals to move the rotor (22) on the transport level to the processing stations (41, 42, 43),
wherein the rotor (22) may be moved above the transport level in a first direction and/or a second direction and/or a third direction with the aid of the interaction of the stator field and the rotor magnetic field,
wherein the first direction and the second direction are oriented in parallel with regard to the transport level and the third direction is oriented perpendicular with regard to the transport level,
wherein each processing station (41, 42, 43) comprises a tool for processing the workpiece in the receiving tray (232) of the workpiece holder (23) of the rotor,
wherein at least one processing station comprises a frame (434) projecting beyond the transport level for depositing the receiving tray (232) of the workpiece holder (23) of the rotor,
wherein the controller (25) is embodied to move the rotor (22) with a workpiece located in the receiving tray (232) with the aid of control signals on the network of the plurality of stator modules (21) during the processing of the workpiece at the processing station with the projecting frame (434) in such a way that the projecting frame (434) of the processing station engages with the receiving tray (232) supported by the second arms of the L-shaped cheeks (2314) of the frame of the workpiece holder (23) in order to lift the receiving tray (232) out of the longitudinal recesses (2316) of the second arms of the L-shaped cheeks (2314) of the frame of the workpiece holder (23) before the processing of the workpiece with the aid of the tool of the processing station.

6. The flexible manufacturing system according to claim 5, wherein the controller (25) is embodied to move the rotor (22) with the workpiece holder (23) and the workpiece located in the receiving tray (232) with the aid of control signals on the composite of the plurality of stator modules (21) in such a way that the rotor (22) is guided laterally past the processing station having the frame projecting above the transport level, the projecting frame projecting into the free space between the rotor housing and the receiving tray (232) supported laterally by the workpiece holder (23) .

7. The flexible manufacturing system according to claim 5 or 6, wherein the controller (25) is embodied to keep the rotor (22) in a floating state when the workpiece is processed in the receiving tray (232) by the tool of the processing station.

8. The flexible manufacturing system according to claim 5 or 6, wherein the controller (25) is embodied to place the rotor (22) onto the stator surface before processing the workpiece in the receiving tray (232) with the aid of the tool of the processing station.

9. The flexible manufacturing system according to claim 5 or 6, wherein the controller (25) is embodied to place the frame (231) and/or the receiving tray (232) of the workpiece holder (23) onto the projecting frame (434) of the processing station before processing the workpiece by lowering the rotor (22) above the projecting frame.

10. The flexible manufacturing system according to claim 9, wherein the projecting frame (434) of the processing station is embodied to move the deposited receiving tray (232).

11. The flexible manufacturing system according to any one of claims 5 to 10, wherein a workpiece storage (3) is provided on the manufacturing platform (1), which comprises a handling device (31) for transferring the workpiece from the workpiece storage into the receiving tray (232) or for transferring the workpiece from the receiving tray (232) into the workpiece storage.

## Revendications

1. Chariot (22) pour un système de fabrication flexible, comprenant un boîtier de chariot en forme de plaque (221) avec un arrangement d'aimants permanents destiné à générer un champ magnétique de chariot et un logement (23) de pièce ouvrée disposé sur le boîtier (221) de chariot,
le logement (23) de pièce ouvrée comprenant un cadre (231) avec deux joues en forme de L (2314) et une coque de logement (232) avec une forme intérieure permettant d'insérer une pièce ouvrée, chaque joue en forme de L (2314) comprenant un premier bras destiné à la fixation sur le boîtier de chariot en forme de plaque (221) et un deuxième bras, en saillie à partir du premier bras, qui est orienté sensiblement parallèlement au boîtier de chariot en forme de plaque (221), les deuxièmes bras des joues en forme de L (2314) comprenant respectivement des évidements longitudinaux (2316) opposés l'un à l'autre destinés à supporter latéralement la coque de logement (232).

2. Chariot selon la revendication 1, le cadre du logement (23) de pièce ouvrée comprenant un premier et un deuxième élément porteur profilé en C (2311, 2312), qui sont réalisés selon une symétrie en miroir.

3. Chariot selon la revendication 2,
le premier et le deuxième élément porteur profilé en C (2311, 2312) possédant chacun un élément porteur longitudinal, un évidement longitudinal (2316) incliné étant formé dans la région du bord supérieur sur le côté intérieur de l'élément porteur longitudinal,
la coque de logement (232) possédant des engagements en forme de C (2332) sur deux côtés opposés, le bras d'engagement supérieur de l'engagement en forme de C (2332) étant conçu pour venir en prise dans un évidement longitudinal (2316) incliné sur le côté intérieur de l'élément porteur longitudinal.

4. Chariot selon la revendication 3, dans lequel des biseaux sont respectivement prévus sur le côté intérieur de l'élément porteur longitudinal au moins en dessous de l'évidement longitudinal (2316) et sur le côté extérieur des engagements en forme de C (2332) de la coque de logement (232).

5. Système de fabrication flexible comprenant une plate-forme de fabrication (1) sur laquelle sont disposés un dispositif de transport (2) et une pluralité de stations d'usinage (41, 42, 43), et
un dispositif de commande (25),
le dispositif de transport (2) comprenant une pluralité de modules de stator (21) et au moins un chariot (22) selon la revendication 1 servant au transport de pièces ouvrées, chaque module de stator (21) comprenant un boîtier (211) de module de stator avec une surface (212) de stator et un arrangement de bobines disposées en dessous de la surface de stator pour générer un champ magnétique de stator,
la pluralité de modules de stator (21) formant, sur la plate-forme de fabrication (1), un ensemble pourvu d'un plan de transport constitué des surfaces de stator (212), destiné à relier les stations d'usinage (41, 42, 43) disposées à côté du plan de transport,
le dispositif de commande (25) étant conçu pour délivrer des signaux de commande à l'ensemble composé de la pluralité de modules de stator (21) et les modules de stator (21) étant conçus pour alimenter électriquement les groupes de bobines des unités de stator associées en fonction des signaux de commande afin de déplacer le chariot (22) sur le plan de transport vers les stations d'usinage (41, 42, 43),
le chariot (22) pouvant être déplacé au-dessus du plan de transport au moyen de l'interaction du champ de stator et du champ magnétique de chariot dans une première direction et/ou une deuxième direction et/ou une troisième direction,
la première direction et la deuxième direction étant orientées parallèlement au plan de transport et la troisième direction perpendiculairement au plan de transport,
chaque station d'usinage (41, 42, 43) comprenant un outil destiné à l'usinage de la pièce ouvrée dans la coque de logement (232) du logement (23) de pièce ouvrée du chariot, au moins une station d'usinage comprenant un cadre (434) qui fait saillie au-dessus du plan de transport pour le dépôt de la coque de logement (232) du logement (23) de pièce ouvrée du chariot,
le dispositif de commande (25) étant conçu pour déplacer le chariot (22), doté d'une pièce ouvrée se trouvant dans la coque de logement (232), dans le cadre de l'usinage de la pièce ouvrée au niveau de la station d'usinage avec le cadre (434) saillant, au moyen de signaux de commande, sur l'ensemble composé de la pluralité de modules de stator (21), de telle sorte que le cadre (434) saillant de la station d'usinage vienne en prise avec la coque de logement (232) soutenue par les deuxièmes bras des joues en forme de L (2314) du cadre du logement (23) de pièce ouvrée, afin de soulever la coque de logement (232) hors des évidements longitudinaux (2316) des deuxièmes bras des joues en forme de L (2314) du cadre du logement 23) de pièce ouvrée (avant l'usinage de la pièce ouvrée par l'outil de la station d'usinage.

6. Système de fabrication flexible selon la revendication 5, le dispositif de commande (25) étant conçu pour déplacer le chariot (22) avec le logement (23) de pièce ouvrée ainsi que la pièce ouvrée qui se trouve dans la coque de logement (232) au moyen de signaux de commande sur l'ensemble composé de la pluralité de modules de stator (21) de telle sorte que le chariot (22) soit guidé pour passer latéralement au niveau de la station d'usinage dont le cadre fait saillie au-dessus du plan de transport, le cadre saillant faisant saillie dans l'espace libre entre le boîtier de chariot et la coque de logement (232) soutenue latéralement par le logement (23) de pièce ouvrée.

7. Système de fabrication flexible selon la revendication 5 ou 6, le dispositif de commande (25) étant conçu pour maintenir le chariot (22) à l'état flottant lors de l'usinage de la pièce ouvrée dans la coque de logement (232) par l'outil de la station d'usinage.

8. Système de fabrication flexible selon la revendication 5 ou 6, le dispositif de commande (25) étant conçu pour déposer le chariot (22) sur la surface de stator avant l'usinage de la pièce ouvrée dans la coque de logement (232) par l'outil de la station d'usinage.

9. Système de fabrication flexible selon la revendication 5 ou 6, le dispositif de commande (25) étant conçu pour déposer le cadre (231) et/ou la coque de logement (232) du logement (23) de pièce ouvrée sur le cadre (434) saillant de la station d'usinage avant l'usinage de la pièce ouvrée en abaissant le chariot (22) au-dessus du cadre saillant.

10. Système de fabrication flexible selon la revendication 9, le cadre (434) saillant de la station d'usinage étant configuré pour déplacer la coque de logement (232) déposée.

11. Système de fabrication flexible selon l'une des revendications 5 à 10, un magasin de pièces ouvrées (3) étant prévu sur la plate-forme de fabrication (1), lequel comprend un dispositif de manipulation (31) servant à transférer la pièce ouvrée du magasin de pièces ouvrées dans la coque de logement (232) ou à transférer la pièce ouvrée de la coque de logement (232) dans le magasin de pièces ouvrées.
